# EUROPEAN PATENT SPECIFICATION

(11) **EP 2 038 611 B1**
(45) Date of publication and mention of the grant of the patent: **20.08.2014**
(21) Application number: 07768420.7
(22) Date of filing: 09.07.2007
(51) Int. Cl.: G01C 21/32, G08G 1/0968, G06F 17/30, G09B 29/10

(54) **MAP INFORMATION DISTRIBUTION CENTER AND MAP INFORMATION DISTRIBUTION METHOD**
KARTENDATEN-VERTEILUNGSZENTRUM UND VERFAHREN ZUR KARTENDATEN-VERTEILUNG
CENTRE DE DISTRIBUTION D'INFORMATIONS CARTOGRAPHIQUES ET PROCÉDÉ DE DISTRIBUTION D'INFORMATIONS CARTOGRAPHIQUES

(30) Priority: 10.07.2006 JP 2006189614; 10.07.2006 JP 2006189616
(43) Date of publication of application: 25.03.2009
(73) Proprietor: Aisin AW Co., Ltd., Anjo-shi, Aichi, 444-1192 (JP); TOYOTA JIDOSHA KABUSHIKI KAISHA, Toyota-shi, Aichi-ken, 471-8571 (JP)
(72) Inventor: NAKAMURA, Norihiro, Okazaki-shi Aichi 444-8564 (JP); NAGATA, Yoriyuki, Okazaki-shi Aichi 444-8564 (JP); SUGIMOTO, Hironobu, Toyota-shi Aichi-ken 471-8571 (JP); KODAN, Tomoki, Toyota-shi Aichi-ken 471-8571 (JP)
(74) Representative: TBK
(86) International application number: PCT/JP2007/064042
(87) International publication number: WO 2008/007794

(56) References cited:
- US-A1- 2002 174 360
- US-A1- 2004 085 227

## Description

### TECHNICAL FIELD

The present invention relates to a map information distribution center. More specifically, the present invention relates to a map information distribution center which distributes updating information for updating map information to a navigation device. Also, the present invention relates to a map information distribution system, more specifically, a map information distribution system in which updating information for updating map information is distributed from a map information distribution center to a navigation device.

### BACKGROUND ART

In recent years, more vehicles have been equipped with a navigation device which provides driving guidance to let a driver reach the desired destination easily. The navigation device here is a device which detects the current vehicle position by a GPS receiver and such, obtains map data corresponding to the current position from recording media such as DVD-ROM and HDD or via a network, and displays the map data on a liquid crystal monitor. The navigation device makes it possible to understand where the vehicle is currently driving at a glance by reading out map data which includes the current vehicle position from a recording medium and such and displaying a map image of a neighboring area of the current vehicle position based on the map data on a display, as well as displaying a vehicle position mark superimposed on the map image and scrolling the map image according to the movement of the vehicle or moving the vehicle position mark while fixing the map image on the screen.

Every year, new roads (newly constructed roads) are constructed all over Japan. With the construction of new roads, existing roads may be removed or the configuration of existing roads may be modified. Therefore, the map data stored in a navigation device needs to be updated at some interval. Updating map data is done by, for example, replacing an old DVD with a new DVD purchased, loading updated map information into the hard disk at shops, or renewing the content of the hard disk based on map data distributed from a map information distribution center, etc.
Various map information distribution centers which automatically distribute the updating information for updating map data stored in a navigation device to the aforementioned navigation device have been offered. Also, various map information distribution systems in which updating information for updating map data stored in a navigation device is automatically distributed from a map information distribution center to the aforementioned navigation device have been offered.

For example, when a navigation device requests differential data for updating map information from a map information distribution center, the navigation device transmits a navigation ID which identifies the aforementioned navigation device and a mesh number for updating map information. The aforementioned map information distribution center compares a version of map information of the mesh stored in the navigation device with that of the latest version based on the navigation ID and mesh number received and, when differential data is available, transmits the differential data to the navigation device. Such map information distribution center is disclosed in Japanese Patent Application Publication No. JP-A-2004-125510 (paragraphs 0032 to 0040 and 0046 to 0063, FIGS. 15 to 18 and 20 to 29), for example.

Also for example, when a navigation device requests differential data for updating map information from a map information distribution center, the navigation device transmits a navigation ID which identifies the aforementioned navigation device and a mesh number for updating map information. The aforementioned map information distribution center compares a version of map information of the mesh stored in the navigation device with that of the latest version based on the navigation ID and mesh number received and, when differential data is available, transmits the differential data to the navigation device. Such map information distribution system is disclosed in Japanese Patent Application Publication No. JP-A-2004-125510 (paragraphs 0032 to 0040 and 0046 to 0063, FIGS. 15 to 18 and 20 to 29), for example.

However, the map information distribution center described in Japanese Patent Application Publication No. JP-A-2004-125510 manages the version of map information stored in a navigation device of all roads regardless of road categories of high standard roads such as national expressways, city expressways and national roads of single or double digit numbers, ordinary roads such as national roads of triple digit numbers or more, principal local roads, prefectural roads and municipal roads, and narrow streets. For this reason, even while a part of the map information relating to national expressways, city expressways and national roads of single or double digit numbers have been updated to that of the latest version, when a navigation II7 and a mesh number for updating map information are received from a navigation device, it is required to transmit the updating information for the whole roads, not extracting and transmitting the bare minimum amount of differential data to the navigation device. Thus, there have been problems in that the amount of communication data between the map information distribution center and the navigation device becomes large.

Also, in the map information distribution system described in Japanese Patent Application Publication No. JP-A-2004-125510, the mesh number for updating map information is transmitted from the navigation device to the map information distribution center. As the mesh number subject to update is transmitted every time, there have been problems of the amount of communication data by the navigation device and the map information distribution center becomes large. In addition, when the navigation device is updated based on the map information recorded on a storage medium, as the map information distribution center not knowing the current version of map information stored in the navigation device, there have been problems of not being able to extract the differential data of the bare minimum amount and to transmit the data to the navigation device.

Document US 2002/174360 A1 comprises a service providing system: To expand the after-sales services offered for a product purchased by a user, a service server that provides services accesses a specified navigation system, which is the product purchased by the user, using a device ID that is uniquely assigned to the navigation system, and then transmits service information to the specified navigation system. In other words, the service server actively accesses a navigation system, which is fundamentally one of countless terminal apparatuses on a communication network, and provides service information to that navigation system. By operating in this way, a great variety of services can be provided whenever appropriate.

Document US 2004/085227 A1 comprises a data architecture of map data, a data architecture of update instruction data, a map information processing apparatus, and a map information providing apparatus: In a road data frame for displaying road maps, each node/link data record describing a link corresponding to a road part includes link identification information identifying an original link, and auxiliary link identification information used for identifying a plurality of alternative links which substitute for any of the original links in the map data. In a route planning data frame for route planning, each connection record describing the interconnection of nodes also includes corresponding link identification information identifying an original link, and corresponding auxiliary link identification information used for identifying a plurality of alternative links which substitute for any of the original links in the map data. By means of identification information of the original link and auxiliary links, it is facilitated to identify the correlation among links in the road data frame and the route planning data frame having different versions.

### DISCLOSURE OF THE INVENTION

An advantage of some aspects of the present invention is to provide a map information distribution center which makes it possible to reduce the amount of communication data with a navigation device, as the map information distribution center manages the updating history of map information stored in the navigation device for each road category, makirig it possible to extract the bare minimum amount of differential data and transmit the data to the navigation device excluding.the differential data relating to road categories which have been updated already.

Also, an advantage of some aspects of the present invention is to provide a map information distribution system which makes it possible to reduce the amount of communication data when a navigation device requests updating map information from a map information distribution center, as well as to accurately manage an updating history of map information stored in the navigation device by the map information distribution center. Another advantage is to provide a map information distribution system which makes it possible to accurately manage the updating history of map information stored in the navigation device by the map information distribution center even when data in the navigation device is updated based on the map information recorded on a storage medium.

In order to achieve the object described above, according to a first aspect, there is provided a map information distribution center comprising: a map information storage storing map information for each version; a version information storage storing, by correlating with identification information identifying an individual navigation device, version information for each road category of the map information stored in the navigation device; a receiving section receiving the identification information from the navigation device; an extracting section obtaining, based on the identification information received, the version information for each road category of the map information stored in the navigation device corresponding to the identification information from the version information storage, and extracting, based on the version information for each road category obtained, differential data for each road category with map information of the latest version from the map information storage; and a transmitting section transmitting the differential data for each road category extracted by the extracting section to the navigation device corresponding to the identification information received by the receiving section.

According to a second aspect, there is provided the map information distribution center according to the first aspect, wherein as the receiving section receives area updating request information for requesting updating information corresponding to a predefined area of the map information together with the identification data, the extracting section obtains, based on the identification information received, the version information for each road category corresponding to the predefined area out of the version information for each road category of the map information stored in the navigation device corresponding to the identification data, and extracts, based on the version information for each road category obtained, differential data for each road category with the map information of the latest version from the map information storage.

According to a third aspect, there is provided the map information distribution center according to the first or second aspect, further comprising: a version information updating section updating, as the receiving section receives, from the navigation device to which the transmitting section transmits the differential data for each road category, updating completion information representing completion of map information updating based on the differential data, version information for each road category of the map information stored in the navigation device and stored in the version information storage based on the differential data transmitted.

According to a fourth aspect of the invention, there is provided the map information distribution center according to any one of the first to third aspects, wherein the map information is divided into a mesh unit of a predetermined region, the version information storage stores the version information for each road category in the mesh unit, and the extracting section extracts the differential data for each road category in the mesh unit.

According to a fifth aspect, there is provided a map information distribution method comprising: a receiving step wherein a map information distribution center receives from a navigation device identification information identifying the navigation device; an extracting step wherein the map information distribution center obtains, based on the identification information received in the receiving step, version information for each road category of map information stored in the navigation device corresponding to the identification information from a version information storage storing, by correlating with identification information identifying an individual navigation device, version information for each road category of the map information stored in the navigation device, so as to extract, based on the version information for each road category obtained, differential data for each road category with map information of the latest version from a map information storage; and a transmitting step wherein the map information distribution center transmits the differential data for each road category extracted in the extracting step to the navigation device corresponding to the identification information received in the receiving step.

According to a sixth aspect, there is provided a map information distribution system comprising: a navigation device updating map information based on updating information received; and a map information distribution center distributing updating information to the navigation device; the navigation device comprising: a request data transmitting section transmitting updating request data for requesting updating information for a predefined area of the map information and identification information identifying the navigation device to the map information distribution center; the map information distribution center comprising: a request data receiving section receiving the updating request data and the identification data; a map information storage storing map information for each version; a version information storage storing, by correlating with the identification information of the navigation device, version information of the map information stored in the navigation device; a first extracting section obtaining, based on the identification information received, the version information of the map information in the predefined area stored in the navigation device corresponding to the identification information from the version information storage, and extracting, based on the version information obtained, differential data with map information of the latest version from the map information storage; a first updating information transmitting section transmitting the differential data extracted by the first extracting section and first distribution identification information identifying the differential data to the navigation device corresponding to the identification information received by the request data receiving section; an identification information receiving section receiving the first distribution identification information and the identification data; and a first version information update controller controlling to obtain, based on the identification information received, the version information of the map information stored in the navigation device corresponding to the identification information from the version information storage, and controlling to update, based on the first distribution identification information received, version information of the predefined area out of the version information obtained; the navigation device further comprising: an updating information receiving section receiving the differential data and the first distribution identification data; and a first update controller controlling to update the map information of the predefined area based on the differential data received, and upon updating of the map information of the predefined area, controlling to transmit the first distribution identification information received and the identification information to the map information distribution center.

According to a seventh aspect, there is provided the map information distribution system according to the sixth aspect, wherein the navigation device further comprises: a vehicle status detector detecting a vehicle status; a destination setting section for setting a destination; an updating spot storage storing a pre-registered updating spot; and a flag setting section for setting ON/OFF of a coordinate flag; the request data transmitting section transmits a coordinate flag set to ON and a coordinate position of the updating spot as the updating request data as the vehicle status detected by the vehicle status detector is at engine start, and transmits a coordinate flag set to OFF and a coordinate position of the destination as the updating request data as the vehicle status detected by the vehicle status detector is at destination setting, and the map information distribution center comprises: an area selection section selecting, as the request data receiving section receives the coordinate flag set to ON and the coordinate position, a first area centered by the coordinate position as the predefined area, and selecting, as the request data receiving section receives the coordinate flag set to OFF and the coordinate position, a second area centered by the coordinate position as the predefined area.

According to a eighth aspect, there is provided the map information distribution system according to the sixth or seventh aspect, wherein the navigation device further comprises: a reader reading map information relating to a predefined distribution area and second distribution identification information identifying the map information from a storing medium storing the map information and the second distribution identification data; and a second update controller controlling to update the map information of the distribution area based on the map information read by the reader, and upon updating of the map information of the distribution area, controlling to transmit the second distribution identification information and the identification information read by the reader to the map information distribution center; the map information distribution center further comprises: a second extracting section extracting map information of the latest version of the distribution area from the map information storage as the request data receiving section receives updating request data from a communication terminal for requesting updating information for the distribution area of the map information; a second updating information transmitting section transmitting the map information of the distribution area extracted by the second extracting section and second distribution identification information identifying the map information to the communication terminal; and a second version information update controller controlling to obtain, as the identification information receiving section receives the second distribution identification information and the identification data, based on the identification information received, the version information of the map information stored in the navigation device corresponding to the identification information from the version information storage, and controlling to update, based on the second distribution identification information received, version information of the distribution area out of the version information obtained; and the communication terminal comprises: a recorder recording, in a manner readable by the reader, the map information of the received distribution area and the second distribution identification information in the storing medium.

According to a ninth aspect, there is provided a map information distribution method wherein a map information distribution center distributes, to a navigation device updating map information based on updating information received, the updating data, the method comprising: a request data transmitting step wherein the navigation device transmits updating request data for requesting updating information for a predefined area of the map information and identification information identifying the navigation device to the map information distribution center; a request data receiving step wherein the map information distribution center receives the updating request data and the identification information transmitted in the request data transmitting step; a first extracting step wherein the map information distribution center obtains, based on the identification information received in the request data receiving step, version information of the map information in the predefined area stored in the navigation device corresponding to the identification information from a version information storage storing, by correlating with identification information identifying the navigation device, version information for each road category of the map information stored in the navigation device, so as to extract, based on the version information obtained, differential data with map information of the latest version from the map information storage; a first updating information transmitting step wherein the map information distribution center transmits the differential data extracted in the first extracting step and first distribution identification information identifying the differential data to the navigation device corresponding to the identification information received in the request data receiving step; an updating information receiving step wherein the navigation device receives the differential data transmitted in the first updating information transmitting step and a first distribution identification data; a first update controlling step wherein the navigation device updates the map information of the predefined area based on the differential data received in the updating information receiving step, and upon updating of the map information of the predefined area, controls to transmit the first distribution identification information received and the identification information to the map information distribution center; an identification information receiving step wherein the map information distribution center receives the first distribution identification information transmitted in the first update controlling step and the identification data; and a first version information update controlling step wherein the map information distribution center obtains, based on the identification information received in the identification information receiving step, version information of the map information stored in the navigation device corresponding to the identification information from the version information storage, so as to control to update, based on the first distribution identification information received, version information of the predefined area out of the version information obtained.

### EFFECTS OF THE INVENTION

In a map information distribution center according to a first aspect, when identification information which identifies a navigation device is received from the aforementioned navigation device, the map information distribution center obtains version information for each road category of the map information stored in the navigation device corresponding to the received identification information from a version information storage, .and extracts differential data for each road category with the map information of the latest version from a map information storage based on the obtained version information for each road category. Then, the map information distribution center transmits the extracted differential data for each road category to the navigation device corresponding to the identification data.

As the map information distribution center manages version information for each road category of the map information stored in each navigation device, it makes it possible to extract and transmit differential data for each road category to the navigation device when identification information which identifies the aforementioned navigation device is received from the navigation device. Thus, it makes it possible for the map information distribution center, when the map information relating to high standard roads such as national expressways, city expressways and national roads of single or double digit numbers stored in the navigation device has already been updated to that of the latest version, to reduce the amount of communication data with the navigation device as it is possible to extract the bare minimum amount of differential data relating to updating map information and transmit to the navigation device excluding the differential data relating to those high standard roads.

In a map information distribution center according to a second aspect, when area updating request information which is a request of updating information corresponding to a predefined area of the map information together with the identification information is received, it makes it possible to extract differential data for each road category corresponding to the predefined area and transmit to a navigation device. Thus, when the navigation device requests an update of map information to the map information distribution center, as it is possible for the navigation device to merely transmit area updating request information which requests updating information and identification information which identifies the aforementioned navigation device to the map information distribution center, it makes it possible to further reduce the amount of communication data when requesting updates.

In a map information distribution center according to a third aspect, when updating completion information which represents the completion of map information updating based on differential data for each road category is received from a navigation device to which the aforementioned differential data has been transmitted, the map information distribution center updates version information for each road category of the map information stored in the aforementioned navigation device.

Thus, as it is possible for the map information distribution center to accurately manage the update history of version information for each road category of the map information stored in the navigation device, it makes it possible to accurately manage version information for each road category of the map information currently stored in the navigation device.

Further, in a map information distribution center, according to a fourth aspect, as map information is divided into a mesh unit of a predefined region and the map information stored in a navigation device is managed with version information for each road category in the aforementioned mesh unit, and as differential data for each road category between the map information stored in the navigation device and the map information of the latest version is extracted in the mesh unit, it makes it possible to accurately manage the update history of version information for each road category of the map information stored in the navigation device in the mesh unit and to accurately manage version information for each road category of the map information currently stored in the navigation device in the mesh unit.

In a map information distribution method according to a fifth aspect, when identification information which identifies a navigation device is received from the aforementioned navigation device, the map information distribution center obtains version information for each road category of the map information stored in the navigation device corresponding to the received identification information from a version information storage, and extracts differential data for each road category with the map information of the latest version from a map information storage based on the obtained version information for each road category. Then, the map information distribution center transmits the extracted differential data for each road category to the navigation device corresponding to the identification data.

As the map information distribution center manages version information for each road category of the map information stored in each navigation device, it makes it possible to extract and transmit differential data for each road category to the navigation device when identification information which identifies the aforementioned navigation device is received from the navigation device. Thus, it makes it possible for the map information distribution center, when the map information relating to high standard roads such as national expressways, city expressways and national roads of single or double digit numbers stored in the navigation device has already been updated to that of the latest version, to reduce the amount of communication data with the navigation device as it is possible to extract the bare minimum amount of differential data relating to updating map information and transmit to the navigation device excluding the differential data relating to those high standard roads.

In a map information distribution system according to a sixth aspect, a navigation device transmits updating request data which requests updating information of map information of a predefined area and identification information which identifies the aforementioned navigation device to a map information distribution center.

Upon receiving the updating request data and the identification data, the map information distribution center obtains version information of the map information of the predefined area stored in the navigation device corresponding to the aforementioned identification information from a version information storage based on the identification information received, and extracts differential data with map information of the latest version from a map information storage based on the version information obtained. The map information distribution center transmits the differential data extracted and first distribution identification information which identifies the differential data to the navigation device corresponding to the identification information received.

Upon receiving the differential data and the first distribution identification data, the navigation device updates the map information of the predefined area based on the differential data received. When the map information of the aforementioned predefined area is updated, the navigation device transmits the first distribution identification information received and the identification information which identifies the navigation device to the map information distribution center.

Upon receiving the first distribution identification information and the identification data, the map information distribution center obtains the version information of the map information stored in the navigation device corresponding to the identification information from the version information storage based on the identification information received and updates version information of the predefined area out of the version information obtained based on the first distribution identification information received.

This makes it possible to reduce the amount of communication data when the navigation device requests updates of map information from the map information distribution center, since that requires for the navigation device to transmit only the updating request data which requests updating information and the identification information which identifies the navigation device to the map information distribution center. It also makes it possible to reduce the amount of communication data transmitted for updating map information in the navigation device, since that requires for the map information distribution center to transmit only the extracted differential data and the first distribution identification information which identifies the differential data to the navigation device.

Upon receiving the first distribution identification information which has been transmitted together with the differential data and the identification information which identifies the navigation device, the map information distribution center obtains the version information of the map information stored in the navigation device corresponding to the received identification information from the version information storage, and updates version information of the predefined area out of the version information obtained to the version of the differential data corresponding to the first distribution identification information received. This makes it possible for the map information distribution center to accurately manage the updating history of the map information stored in the navigation device and to accurately manage the version information of the map information currently stored in the navigation device.

Since it is possible for the map information distribution center to accurately manage the updating history of the map information stored in the navigation device, it makes it possible to further reduce the amount of communication data transmitted for updating the map information in the navigation device as it is possible to extract the bare minimum amount of differential data for updating the map information in the navigation device when receiving the updating request data as well as the identification information which identifies the navigation device from the navigation device.

In a map information distribution system according to a seventh aspect, a navigation device transmits a coordinate flag which is set to ON and a coordinate position of a pre-registered updating spot as updating request data to a map information distribution center at engine start. Upon receiving the coordinate flag which is set to ON as the updating request data and the coordinate position, the map information distribution center sets a first area centered by the coordinate position as a predefined area for updating map information. The navigation device, when setting a destination, transmits the coordinate flag which is set to OFF and a coordinate position of the destination as the updating request data to the map information distribution center. Upon receiving the coordinate flag which is set to OFF as the updating request data and the coordinate position, the map information distribution center sets a second area centered by the coordinate position as a predefined area for updating map information.

This makes it possible to further reduce the amount of communication data when requesting updates, since that requires for the navigation device to only transmit the coordinate flag which is set to ON or OFF and the coordinate position as updating request data to the map information distribution center.

In a map information distribution system according to an eighth aspect, a map information distribution center, when receiving updating request data which requests for updating information of map information of the area subject to distribute from a communication terminal, extracts the map information of the latest version of the area subject to distribute. The map information distribution center transmits the extracted map information of the area subject to distribute and second distribution identification information which identifies the map information to the communication terminal.

Upon receiving the map information of the area subject to distribute and the second distribution identification information which identifies the aforementioned map information, the communication terminal records the received map information of the area subject to distribute and the second distribution identification information to a storage medium so as to be readable by a reader in the navigation device.

Meanwhile, the navigation device updates the map information of the area subject to distribute by reading out the map information from the aforementioned storage medium via the reader. When the map information of the area subject to distribute is updated, the navigation device reads out the second distribution identification information from the storage medium via the reader, and transmits the second distribution identification information and identification information which identifies the navigation device to the map information distribution center.

Upon receiving the second distribution identification information and the identification data, the map information distribution center obtains version information of the map information stored in the navigation device corresponding to the identification information from a version information storage based on the identification information received, and updates the version information of the area subject to distribute out of the version information obtained based on the second distribution identification information received.

This makes it possible for the navigation device to update the map information of the aforementioned area subject to distribute to the latest version of the map information of the area subject to distribute by reading out the map information from the storage medium and updating the map information of the area subject to distribute.

When the map information of the area subj ect to distribute is updated by reading out the map information from the storage medium via the reader, the navigation device reads out the second distribution identification information from the storage medium and transmits the second distribution identification information and the identification information which identifies the navigation device to the map information distribution center. Accordingly, upon receiving the identification data, the map information distribution center obtains the version information of the map information stored in the navigation device corresponding to the identification information from the version information storage and updates the version information of the predefined area of version information obtained to the latest version of map information of the area subject to distribute corresponding to the second distribution identification information received. This makes it possible for the map information distribution center to accurately manage the updating history of the map information stored in the navigation device even when the navigation device updates the map information via the storage medium, as well as to accurately manage the version information of the map information currently stored in the navigation device.

Since it is possible for the map information distribution center to accurately manage the updating history of the map information stored in the navigation device even when the navigation device updates the map information via the storage medium, it makes it possible to further reduce the amount of communication data transmitted for updating the map information in the navigation device, as it is possible to accurately extract the bare minimum amount of differential data for updating the map information in the navigation device upon receiving the updating request data together with the identification information which identifies the navigation device from the navigation device.

In a map information distribution method according to a ninth aspect, a navigation device transmits updating request data which requests updating information of map information of a predefined area and identification information which identifies the aforementioned navigation device to a map information distribution center.

Upon receiving the updating request data and the identification data, the map information distribution center obtains version information of the map information of the predefined area stored in the navigation device corresponding to the aforementioned identification information from a version information storage based on the identification information received, and extracts differential data with map information of the latest version from a map information storage based on the version information obtained. The map information distribution center transmits the differential data extracted and first distribution identification information which identifies the differential data to the navigation device corresponding to the identification information received.

Upon receiving the differential data and the first distribution identification data, the navigation device updates the map information of the predefined area based on the differential data received. When the map information of the aforementioned predefined area is updated, the navigation device transmits the first distribution identification information received and the identification information which identifies the navigation device to the map information distribution center.

Upon receiving the first distribution identification information and the identification data, the map information distribution center obtains the version information of the map information stored in the navigation device corresponding to the identification information from the version information storage based on the identification information received and updates version information of the predefined area out of the version information obtained based on the first distribution identification information received.

This makes it possible to reduce the amount of communication data when the navigation device requests updates of map information from the map information distribution center, since that requires for the navigation device to transmit only the updating request data which requests updating information and the identification information which identifies the navigation device to the map information distribution center. It also makes it possible to reduce the amount of communication data transmitted for updating map information in the navigation device, since that requires for the map information distribution center to transmit only the extracted differential data and the first distribution identification information which identifies the differential data to the navigation device.

Upon receiving the first distribution identification information which has been transmitted together with the differential data and the identification information which identifies the navigation device, the map information distribution center obtains the version information of the map information stored in the navigation device corresponding to the received identification information from the version information storage, and updates version information of the predefined area out of the version information obtained to the version of the differential data corresponding to the first distribution identification information received. This makes it possible for the map information distribution center to accurately manage the updating history of the map information stored in the navigation device and to accurately manage the version information of the map information currently stored in the navigation device.

Since it is possible for the map information distribution center to accurately manage the updating history of the map information stored in the navigation device, it makes it possible to further reduce the amount of communication data transmitted for updating the map information in the navigation device as it is possible to extract the bare minimum amount of differential data for updating the map information in the navigation device when receiving the updating request data as well as the identification information which identifies the navigation device from the navigation device.

### BRIEF DESCRIPTION OF THE DRAWINGS

FIG 1 is a block diagram of a map information distribution system in accordance with an embodiment of the present invention;
FIG 2 is an illustration describing a version management scheme of map data in a map information distribution center in the map information distribution system;
FIG. 3 is a block diagram of a navigation device in the map information distribution system;
FIG. 4 is a flowchart of a navigation map information updating process executed when the engine is started or when a destination is set to automatically update navigation map information in a navigation map information base in the map information distribution system;
FIG. 5 is a chart showing one example of differential data management information stored in a differential data management database in the map information distribution center;
FIG. 6 is a chart showing one example of navigation updating history information stored in a navigation updating history information database in the map information distribution center;
FIG. 7 is an illustration describing one example of extracted differential data of each block (mesh) of the area subject to distribute;
FIG. 8 is a chart showing one example of distribution management information corresponding to each piece of the differential data of the area subject to distribute shown in FIG. 7;
FIG. 9 is a chart showing one example of the updated navigation updating history information shown in FIG. 6 based on the distribution management information shown in FIG 8 ;
FIG. 10 is a flowchart of a storage medium recording process for recording updating map information by prefecture to a CD-ROM executed by the map information distribution center and a PC;
FIG. 11 is a chart showing one example of PC distribution management information stored in a distribution management information database in step 313 of the flowchart indicated in FIG. 10;
FIG. 12 is a chart showing one example of updating map information by prefecture recorded on a CD-ROM in step 213 of the flowchart indicated in FIG. 10;
FIG. 13 is a flowchart of an updating process of navigation updating history information in the aforementioned map information distribution center when navigation map information in the navigation device is updated via the CD-ROM created in the storage medium recording process indicated in FIG 10;
FIG 14 is an illustration describing one example of updated navigation map information in the navigation device via the CD-ROM in which updating map information shown in FIG. 12 is recorded in step 32 of the flowchart indicated in FIG. 13; and
FIG 15 is a chart showing one example of the updated navigation updating history information shown in FIG. 6 based on the PC distribution management information shown in FIG 11 in step 413 of the flowchart indicated in FIG. 13.

### BEST MODE FOR CARRING OUT THE INVENTION

A specific instance of one embodiment of a map information distribution center and a map information distribution system of the present invention will be described in details referring to the drawings.

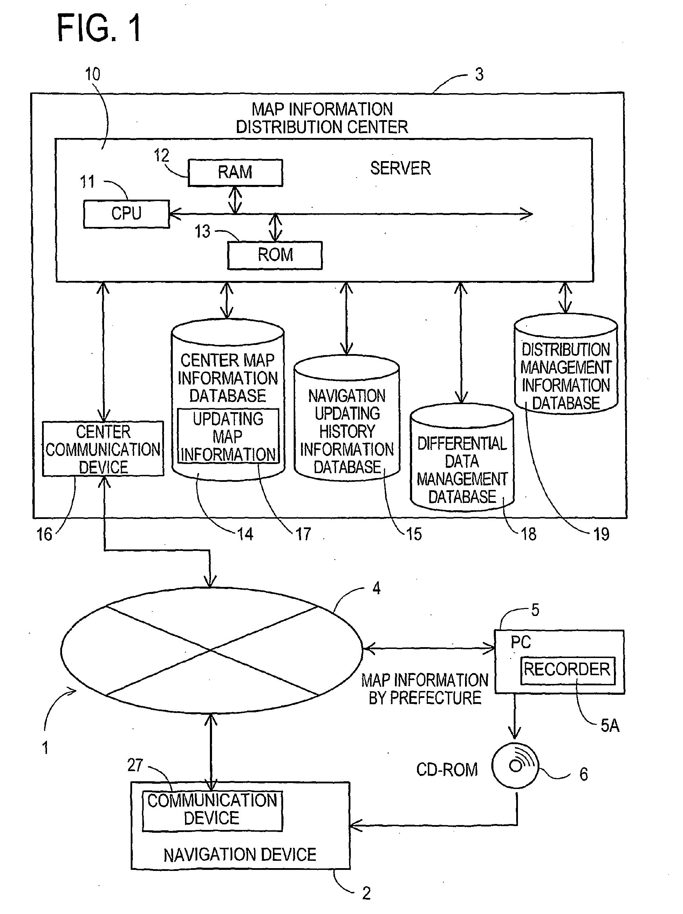

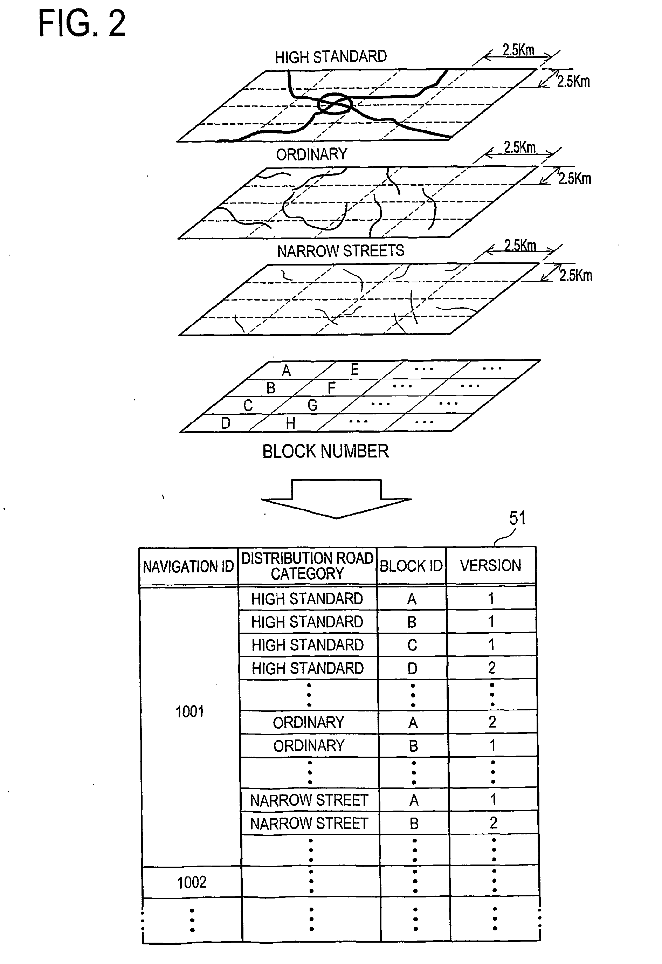

The outline of configurations of a map information distribution system 1 of a first embodiment of the present invention is described with reference to FIGS. 1 to 3. FIG. 1 is a block diagram of the map information distribution system 1 of the first embodiment of the present invention. FIG. 2 is an illustration describing a version management scheme of map data in a map information distribution center 3.

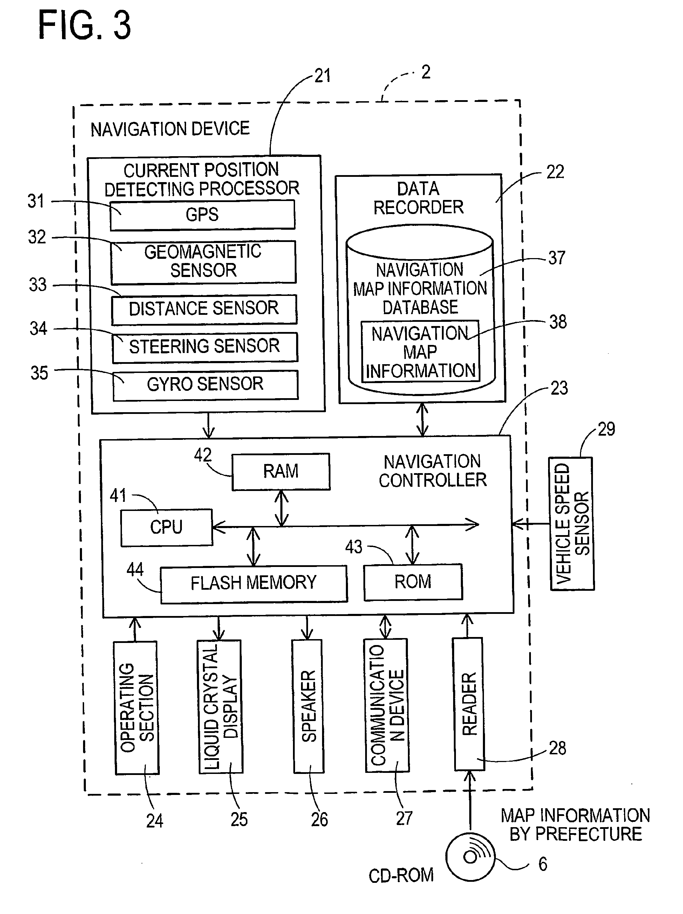

As indicated in FIG. 1, the map information distribution system 1 of the first embodiment of the present invention is configured basically with a navigation device 2, the map information distribution center 3 which distributes updating information for updating map information to the navigation device 2, a network 4, and a personal computer (PC) 5 which can be connected to the network 4 and owned by a user, a shop and such of the navigation device 2. The navigation device 2 and map information distribution center 3, as well as the PC 5 and map information distribution center 3, are configured to send and receive various types of information respectively via the network 4. The configuration of navigation device 2 is described later in details referring to FIG 3.

As indicated in FIG. 1, the map information distribution center 3 has a server 10, a center map information database 14 as a map information recording section which is connected to the server 10, a navigation updating history information database 15, a center communication device 16, a differential data management database 18, and a distribution management information database 19. The sever 10 has a CPU 11 as an arithmetic device and a controller to control the whole server 10, a RAM 12 to be used as a working memory when the CPU 11 executes various arithmetic processes, and an internal storage such as a ROM 13 storing various control programs to run the later described processes of navigation map information updating such as extracting updating information from the center map information database 14 for updating map information of the area subject to distribute to the map information of new version within the map information stored in the navigation device 2 according to a request from the navigation device 2, as well as distributing updating information with an addition of a distribution ID which identifies the updating information to the navigation device 2. An MPU and such may be used in place of the CPU 11.

The center map information database 14 stores updating map information 17, which is created by the map information distribution center 3 and is the base of map information when updating map information stored in the navigation device 2, sorted by version. Further, the center map information database 14 stores updating information (hereinafter called differential data) for updating a part (an area of 80 km square centered by the current vehicle position or a pre-registered home position, for example) or a whole of map information currently stored in the navigation device 2 to the latest version stored in the updating map information 17, sorted by version.

Here, a version means created time data to specify when map information is created. It makes it possible to identify the time when the map information was created by referring to the version.

The updating map information 17 stored in the center map information database 14 stores various types of information required for route guidance and map display of the navigation device 2 including, for example, map display data to display maps, intersection data relating to intersections, node data relating to node points, link data relating to roads (links) as one of facilities, search data to search routes, shop data relating to point of interest (POI) such as a shop as one of facilities, and spot search data to search spots.

Especially for map display data, it is configured by units of 4 divided blocks (1/2 length), 16 divided blocks (1/4 length) and 64 divided blocks (1/8 length) based on a 10 km x 10 km block of a secondary mesh and the unit of each geographical area is set as to have approximately the same level of data amount. The smallest unit of 64 divided blocks is a size of an approximately 1.25 km square.

As for node data, the data stored includes the data relating to forks in actual roads (including intersections and T-shaped intersections), coordinates (position) of node points which are set to each road at predefined intervals according to a curvature radius and such, node attributes representing whether a node corresponds to an intersection or not, a connection link number list which is a list of link numbers of connecting links to nodes, an adjacent node number list which is a list of node numbers of adjacent nodes via links, and heights (altitudes) of each node point.

As for link data, the data stored includes the data relating to links that configure roads representing such as widths, gradients, cants, banks, surface conditions, number of lanes, places where any lane ends, places where any road narrows, and railroad crossing of the roads to which links attribute; the data relating to corners representing such as curvature radii, intersections, T-shaped intersections, and entrance and exit of comers; the data relating to road attributes representing such as downhills and uphills; and the data relating to road categories representing toll roads including national expressways, city expressways, ordinary toll roads and toll bridges and ordinary roads including national roads, prefectural roads and narrow streets. Further, as for toll roads, the data stored includes access roads of entrance and exit of toll roads (ramps), and tollgates (interchanges).

As indicated in FIG 2, differential data for each road category is managed in each block of an approximately 2.5 km square which is a 16 divided (1/4 length) block of 10 km x 10 km area block of the secondary mesh above, divided in three distribution road categories of a high standard road category which includes national expressways, city expressways, freeways, ordinary toll roads, and national roads of single and double digit numbers, an ordinary road category which includes national roads of triple digit numbers or more, principal local roads, prefectural roads, and municipal roads, and a narrow street category which includes narrow streets, and stored in the updating map information 17 by versions.

Hereinafter, national expressways, city expressways, freeways, ordinary toll roads, and national roads of single and double digit numbers are called as high standard roads. National roads of triple digit numbers or more, principal local roads, prefectural roads, municipal roads are called as ordinary roads. Streets in downtown areas and such narrower than ordinary roads are called as narrow streets.

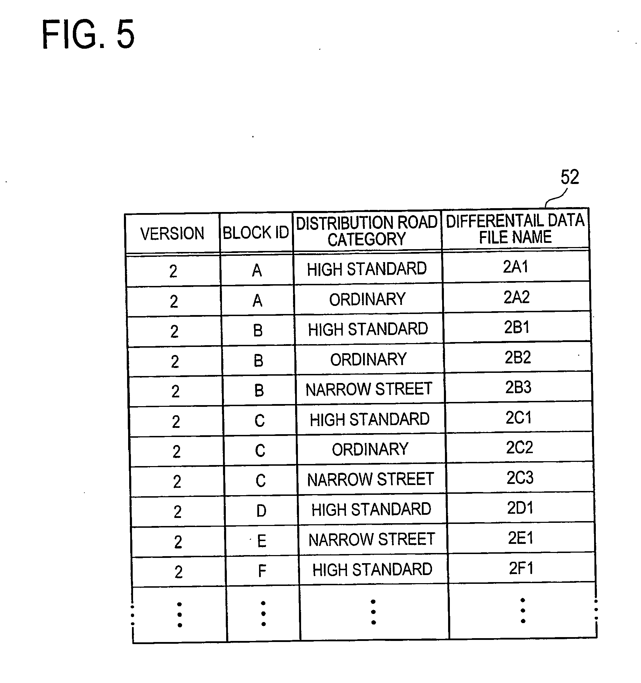

The differential data management database 18 is managed by setting a block ID (as A, B, C, D, E, F, G, H, and so on for 16 areas in FIG. 2) for each area of an approximately 2.5 km square in each version of the updating map information 17 as described later, and storing a differential data file name representing each piece of the differential data for each area sorted further by three distribution road categories of road standards (refer to FIG. 5).

As for search data, the data stored are used when searching and displaying routes to the set destination and include such data as cost data used to calculate search cost including cost of passing nodes (hereinafter called node cost) and cost of links which configure roads (hereinafter called link cost), and route display data to display the route selected by route searching on a map displayed on the liquid crystal display 25.

As for shop data, the data stored includes the data relating to POI such as hotels, hospitals, gas stations, parking lots and tourist facilities for each region together with their ID to identify the POI. The aforementioned center map information database 14 also stores audio output data to output the predefined data from a speaker 26 in the navigation device 2.

Meanwhile, the navigation updating history information database 15 stores navigation updating history information relating to an updating history of map information stored in each navigation device 2 updated to date together with its navigation ID to identify the navigation device 2.

As indicated in FIG 2, the navigation updating history information 51 in each navigation device 2 stores the version of map information currently stored in the navigation device 2 corresponding to each block ID assigned to the block of an approximately 2.5 km square area, sorted by the navigation ID which specifies the navigation device 2 and divided in three distribution road categories of high standard which represents high standard roads, ordinary which represents ordinary roads and narrow street which represents narrow streets.

For example, the versions of map information currently stored in the navigation device 2 with the navigation ID of 1001 are, in the area of block ID A, version 1 for the map data in the distribution road category of high standard, version 2 for the map data in the distribution road category of ordinary, and version 1 for the map data in the distribution road category of narrow street.

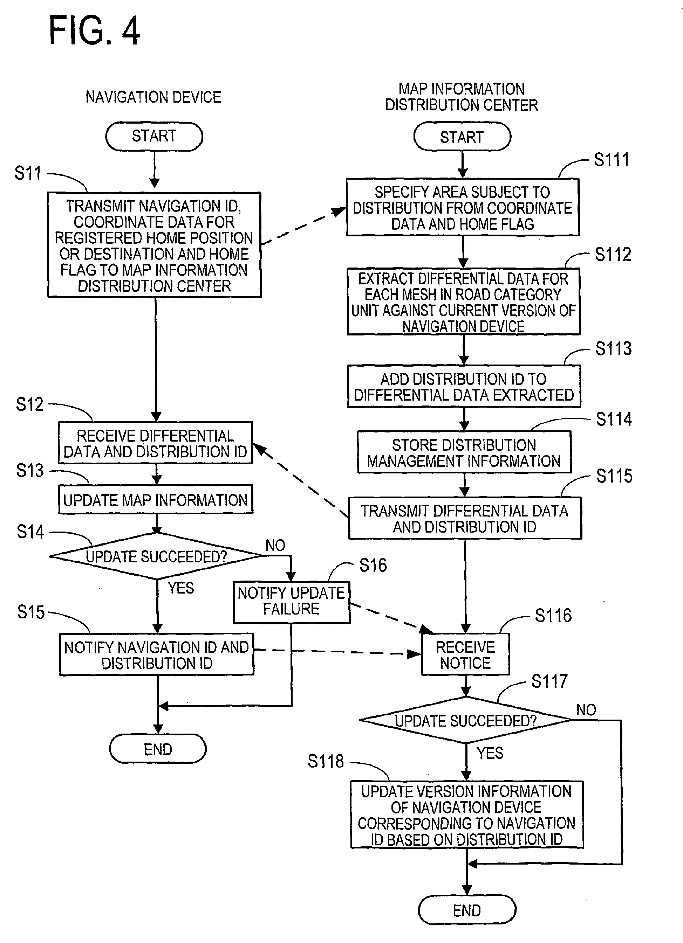

Every time the map information in the navigation device 2 is updated as described later, the navigation updating history information 51 is renewed to a new updating history by storing the latest version corresponding to a distribution road category for each updated block ID (refer to FIG. 4).

The map information distribution center 3, when requested by the navigation device 2, updates the map information stored in the navigation device 2 with the latest version of updating map information 17 stored in the center map information database 14.

More specifically, in the map information distribution system 1 of the first embodiment of the present invention, when the navigation device 2 requests a distribution of updating map information 17 of a predefined area, the update is done by extracting differential data for updating to the latest version of updating map information 17 and distributing the differential data together with a distribution ID added to the navigation device 2 as described later (refer to FIG 4). As for the differential data transmitted to the navigation device 2, for updating from the currently stored map information in the navigation device 2 to the latest version of updating map information 17, the bare minimum amount of data in each distribution road category is transmitted.

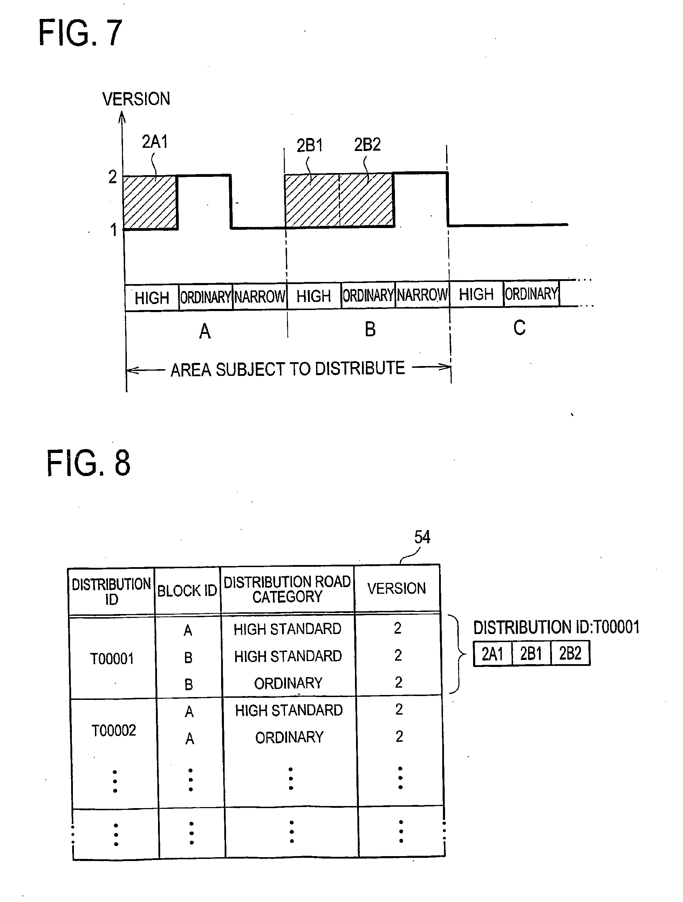

The distribution management information database 19 stores, for each distribution ID added to the differential data distributed to the navigation device 2, the block ID which represents each block of the area subject to distribute the differential data, and the updated version of a distribution road category for each block ID (refer to FIG. 8).

The map information distribution center 3 may be run by any individuals, business companies, organizations, local governments, and government affiliated organizations as well as VICS (registered trademark) centers.

As for the network 4, a communication system of telecommunication networks such as a local area network (LAN), a wide area network (WAN), an intranet, a mobile telephone network, a telephone line network, a public telecommunication network, a private communication network, and the Internet can be used. Such communication systems that use communication satellite (CS) broadcasting and broadcast satellite (BS) broadcasting by broadcast satellites, terrestrial digital television broadcasting, and FM multiplex broadcasting may be used as well. Further, such communication systems as non-stop electronic toll collection system (ETC) and dedicated short range communication system (DSRC) used in intelligent transportation systems (ITS) may be used.

As indicated in FIG. 1, the personal computer (PC) 5 owned by a user, a shop and such of the navigation device 2 is configured to receive the distribution of map information of the latest version stored in the updating map information 17 by prefecture by the communication with the map information distribution center 3 via the network 4. The PC 5 has a recorder 5A which records the received map information by prefecture on to a CD-ROM 6 as a storage medium so as to be readable by the reader 28 (refer to FIG. 3) in the navigation device 2. As far as readable by the reader 28 in the navigation device 2, magnetic disks such as a flexible disk, a memory card, a magnetic tape, a magnetic drum, an MD, a DVD, an MO, an IC card, an optical card and the like may be used in place of the CD-ROM 6.

Next, the outline of configurations of the navigation device 2 which is included in the map information distribution system 1 of the first embodiment of the present invention is described with reference to FIG. 3. FIG. 3 is a block diagram of the navigation device 2 of the first embodiment of the present invention.

As indicated in FIG. 3, the navigation device 2 of the first embodiment of the present invention includes a current position detecting processor 21 which detects the current position of a vehicle, a data recorder 22 in which coordinates of a pre-registered home position (longitude and latitude, for example) and various types of data are recorded, a navigation controller 23 which performs various arithmetic processes based on the data entered, an operating section 24 which accepts operations made by an operator, a liquid crystal display 25 which displays data such as a map for the operator, a speaker 26 which outputs audio guidance relating to route guidance, a communication device 27 which makes communication with an information center such as a traffic information center and the map information distribution center 3, and a reader 28 which reads out the map information of a predefined version recorded by prefecture from the CD-ROM 6 as a storage medium. The navigation controller 23 is coupled with a vehicle speed sensor 29 which detects the driving speed of the vehicle. The reader 28 may be configured to read out the recorded map information and such, not only from the CD-ROM 6 but also from a DVD.

The components included in the navigation device 2 are described in greater detail next. The current position detecting processor 21 includes a GPS 31, a geomagnetic sensor 32, a distance sensor 33, a steering sensor 34, a gyro sensor 35 as a direction detector, and an altimeter (not shown), and can detect the current position and direction of the vehicle, a distance to a landmark (an intersection, for example), and such.

More specifically, the GPS 31 detects the current position of the vehicle on the ground and the current time by receiving radiowaves emitted from satellites; the geomagnetic sensor 32 detects a direction of the vehicle by measuring the geomagnetic; and the distance sensor 33 detects the distance between predefined points on a road and such. As for the distance sensor 33, for example, a sensor which measures a rotation speed of the vehicle wheels (not shown) and detects a distance, based on the rotation speed measured, and a sensor which measures acceleration speed and double integrates the acceleration speed measured to obtain a distance may be used.

The steering sensor 34 detects a rudder angle of the vehicle. As for the steering sensor 34, for example, an optical rotation sensor and a rotational resister sensor attached to a rotating section of a steering wheel (not shown), and an angle sensor attached to a wheel may be used.

The gyro sensor 35 detects an angle of traverse. As for the gyro sensor 35, for example, a gas rate gyro and a vibrating gyro may be used. The direction of the vehicle can be detected by integrating the angle of traverse detected by the gyro sensor 35.

The data recorder 22 has a hard disk (not shown) as an external storage device and a storage medium, a navigation map information database 37 stored in the hard disk, and a recording head (not shown) as a driver to write predefined data to the hard disk as well as to read out predefined programs and such. Although the hard disk is used as an external storage device and a storage medium of the data recorder 22 in the first embodiment of the present invention, other than the hard disk, magnetic disks such as a flexible disk may be used as an external storage device. A memory card, a magnetic tape, a magnetic drum, a CD, an MD, a DVD, an optical disc, an MO, an IC card, an optical card and the like may be used as an external storage device as well.

The navigation map information database 37 stores navigation map information 38 which is used for route guidance and route searching of the navigation device 2 and is the subject to update by the map information distribution center 3 as well. The navigation map information 38 includes, similar to the updating map information 17, various types of information required for route guidance and map display, for example, new road data to identify newly constructed roads, map display data to display maps, intersection data relating to intersections, node data relating to node points, link data relating to roads (links) as one of facilities, search data to search routes, shop data relating to POI such as a shop as one of facilities, and spot search data to search spots. As the details of various types of data have been described already, their details are omitted here.

The content of the navigation map information database 37 is updated by downloading such updating information as differential data distributed from the map information distribution center 3 via the communication device 27 or updating map information recorded on the later described CD-ROM 6.

As indicated in FIG. 3, the navigation controller 23 included in the navigation device 2 has a CPU 41 as an arithmetic device and a controller to control the whole navigation device 2, a RAM 42 used as a working memory when the CPU 41 executes various arithmetic processes as well as to store route data and such when a route is searched, a ROM 43 storing, in addition to control programs, a later described program of navigation map information updating process (refer to FIG 4, for example) which is executed when the engine is started and when a destination is set, and an internal storage device such as a flash memory 44 to store the programs read out from the ROM 43. As for the RAM 42, ROM 43 and flash memory 44, for example, a semiconductor memory and a magnetic core may be used. As for the arithmetic device and control device, an MPU and the like may be used in place of the CPU 41.

In the first embodiment of the present invention, although various programs are stored in the aforementioned ROM 43 and various types of data are stored to the aforementioned data recorder 22, programs and data may be read out from the same external storage device, memory card and such and stored to the aforementioned flash memory 44. Further, the aforementioned programs and data can be updated by replacing the memory card and such.

The aforementioned navigation controller 23 is electrically coupled with peripheral devices (actuators) of the operating section 24, the liquid crystal display 25, the speaker 26, the communication device 27, and the reader 28.

The operating section 24 is operated, for example, when correcting the current position at the start of drive, when entering a start point as a guidance start point and a destination as a guidance end point, and when searching data relating to facilities, and has a plurality of operating switches (not shown) such as various keys and a destination setting button. The navigation controller 23 controls so as to perform various corresponding operations according to switch signals output by pressing and such of switches. As for the operating section 24, for example, a keyboard, a mouse, a barcode reader, a remote controller for remote operation, a joystick, a light pen, and a stylus pen may be used. The operating section 24 may be configured with a touch panel attached to the front surface of the liquid crystal display 25.

The liquid crystal display 25 displays operation guidance, operation menu, guidance of keys, guidance route from the current position to the destination, guidance information along the guidance route, traffic information, news, weather forecast, time, mail, television programs and such. A CRT display, a plasma display and such may be used, as well as a hologram device which projects a hologram to the front window of the vehicle, in place of the liquid crystal display 25.

The speaker 26 outputs voice guidance of a name of facility as a destination selected and driving guidance along the guidance route according to instructions from the navigation controller 23. As for the voice guidance, for example, "the new road to the selected ski area has been updated", "200 meters ahead, right direction at ABC intersection" and "national road No. N ahead is congested" are given. The sound output from the speaker 26 may also include various sound effects and various guidance information pre-recorded on to tapes and memories, other than synthesized voice.

The communication device 27 is a section to make communication with the map information distribution center 3, and sends and receives the latest version of updating map information 17 of a predefined block area with the map information distribution center 3 as described later. In addition to the map information distribution center 3, it is also possible for the communication device 27 to receive traffic information including traffic congestion information, traffic control information, parking lot information, traffic accident information, and information on congestion of service areas and such transmitted from, for example, a VICS (registered trademark) center.

In the map information distribution system 1 having the aforementioned configurations, a process of updating navigation map information performed by the CPU 41 in the navigation device 2 and the CPU 11 in the map information distribution center 3, when the engine is started or when a destination is set, to automatically update the navigation map information 38 in the navigation map information database 37 is described next referring to FIGS. 4 to 9.

FIG. 4 is, in the map information distribution system 1 of the first embodiment of the present invention, a flowchart of the process of updating navigation map information performed by the CPU 41 in the navigation device 2 and the CPU 11 in the map information distribution center 3, when the engine is started or when a destination is set, to automatically update the navigation map information 38 in the navigation map information database 37. The programs indicated in the flowchart in FIG. 4 are stored in the ROM 43 in the navigation device 2 and the ROM 13 in the map information distribution center 3, and executed by the respective CPUs 41 and 11.

As indicated in FIG. 4, in step (hereinafter called S) 11, the CPU 41 in the navigation device 2 first, when the engine is started by turning an ignition switch on, more specifically, when the navigation device 2 is powered as an accessory (ACC) is turned on, reads out coordinate data of a predefined home position (for example, latitude and longitude of the home position, called a registered home position hereinafter) from the data recorder 22 as any destination is not yet to be set and stores the coordinate data of the registered home position to the RAM 42 as coordinate data to transmit to the map information distribution center 3. The CPU 41 also reads out a home flag (coordinate flag) from the RAM 42 and sets the home flag on, more specifically, assigns a value of 1 to the home flag and stores it again to the RAM 42. The CPU 41 reads out coordinate data representing the registered home position and the home flag from the RAM 42 and transmits the aforementioned coordinate data and home flag together with a navigation ID (for example, navigation ID 1001) which identifies the aforementioned navigation device 2 to the map information distribution center 3.

In S11, when a destination is set with the operating section 24, the CPU 41 in the navigation device 2 stores the coordinate data of the aforementioned destination to the RAM 42. The CPU 41 reads out the home flag from the RAM 42 and sets the aforementioned home flag to off, more specifically, assigns a value of 0 to the home flag and stores it again to the RAM 42. The CPU 41 reads out the coordinate data of the destination and home flag from the RAM 42 and transmits the aforementioned coordinate data and home flag together with the navigation ID which identifies the aforementioned navigation device 2 to the map information distribution center 3.

Meanwhile, as indicated in FIG. 4, the CPU 11 in the map information distribution center 3, when receiving the coordinate data and home flag transmitted from the navigation device 2 together with the navigation ID which identifies the aforementioned navigation device 2 via the center communication device 16 in S111, stores the aforementioned navigation ID, coordinate data and home flag to the RAM 12.

The CPU 11 reads out the aforementioned coordinate data and home flag from the RAM 12 again. When the value of the home flag is 1, the CPU 11 sets a predefined area centered by the coordinate data as a first area (for example, an area of an approximately 80 km square centered by the coordinate data) as an area subject to distribute for which differential data is extracted. More specifically, the first area centered by the registered home position is set as the area subject to distribute to extract differential data.

The CPU 11 reads out the aforementioned coordinate data and home flag from the RAM 12 again. When the value of home flag is 0, the CPU 11 sets a predefined area centered by the coordinate data as a second area (for example, an area of an approximately 10 km square) as an area subject to distribute for which differential data is extracted. More specifically, the second area centered by the destination is set as the area subject to distribute to extract differential data.

In S 112, the CPU 11 reads out the navigation ID received in S111 above from the RAM 12 and the information relating to the updating history of the navigation device 2, which is identified by the navigation ID, of the area subject to distribute set in S111 above from the navigation updating history information database 15, extracts the current version of the navigation device 2 in distribution road categories of high standard, ordinary and narrow street in each block (mesh) of an approximately 2.5 km square of the area subject to distribute, and stores them to the RAM 12. The CPU 11 reads out the differential data file name representing the differential data of the latest version in each block of the area subject to distribute from the differential data management database 18, extracts the differential data file name between the current version in each block of the area subject to distribute in the navigation device 2 and the latest version, and stores them to the RAM 12. Then, the CPU 11 reads out the differential data corresponding to each differential data file name from the updating map information 17 and stores them to the RAM 12.

One of the examples of extracting differential data between the current version of the navigation device 2 in distribution road categories of high standard, ordinary and narrow street in each block (mesh) of the area subject to distribute and the latest version performed by the CPU 11 is specifically described referring to FIGS. 5 to 7. To simplify the description, the area subject to distribute is set as two blocks of an approximately 2.5 km square. However, when an area subject to distribute is 80 km square, 1024 blocks (mesh) of an approximately 2.5 km square each are included. When an area subject to distribute is 10 km square, 16 blocks (mesh) of an approximately 2.5 km square each are included.

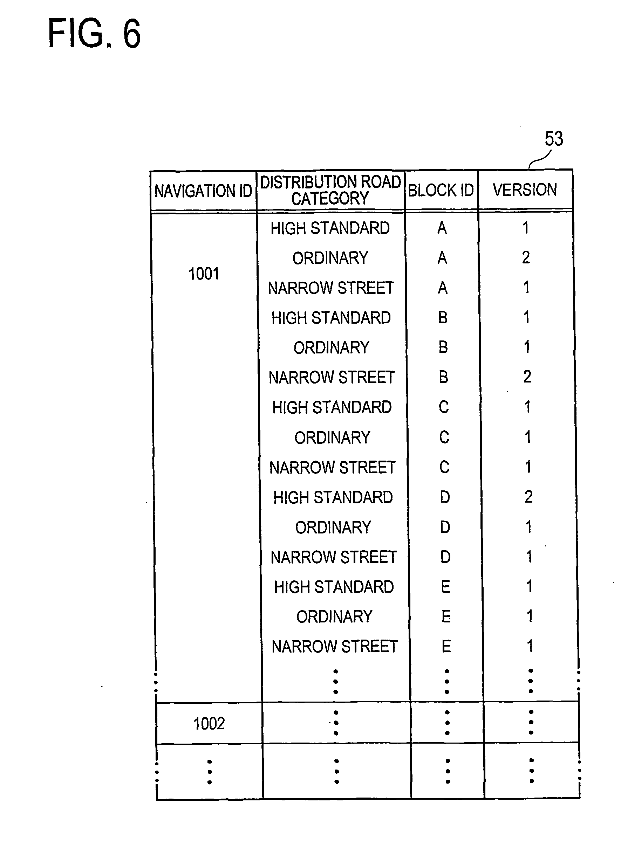

FIG 5 is a chart showing one example of differential data management information 52 stored in the differential data management database 18 in the map information distribution center 3. FIG. 6 is a chart showing one example of navigation updating history information 53 stored in the navigation updating history information database 15 in the map information distribution center 3. FIG. 7 is an illustration describing one example of extracted differential data in each block (mesh) of the area subject to distribute.

As indicated in FIG. 5, the differential data management information 52 stored in the differential data management database 18 in the map information distribution center 3 stores, for individual block IDs (A, B, C, D, and so on) representing each block of an approximately 2.5 km square, the differential data file name which represents differential data for updating to the map information of the latest version stored in the updating map information 17 which is version 2 sorted by the road standards of three distribution road categories.

For example, the differential data file names for updating the map information of the block of an approximately 2.5 km square with the block ID of A to version 2 are 2A1 for high standard which represents the distribution road category of high standard roads and 2A2 for ordinary which represents the distribution road category of ordinary roads.

As indicated in FIG. 6, the navigation updating history information 53 stored in the navigation updating history information database 15 in the map information distribution center 3 stores, for the area of each block of an approximately 2.5 km square with block IDs (A, B, C, D, and so on), the version of map information currently stored in the navigation device 2 with the navigation ID of 1001 in three distribution road categories of high standard which represents high standard roads, ordinary which represents ordinary roads and narrow street which represents narrow streets.

For example, the versions of map information currently stored in the navigation device 2 with the navigation ID of 1001 are 1 for the map data in the distribution road category of high standard, 2 for the map data in the distribution road category of ordinary and 1 for the map data in the distribution road category of narrow street.

The CPU 11 receives the data of 1001 as the navigation ID in S111 above and stores it to the RAM 12. When the blocks of block IDs of A and B are set as the area subject to distribute, the CPU 11 reads out the version for each distribution road category corresponding to the blocks of block IDs of A and B which corresponds to the navigation ID of 1001 from the navigation updating history information 53 and stores them to the RAM 12. The CPU 11 reads out each distribution road category corresponding to the blocks of block IDs of A and B from the differential data management information 52 and judges whether the version in the navigation updating history information 53 corresponding to each distribution road category read out is version 2 or not.

Next, as indicated in FIG. 7, when the version of the navigation updating history information 53 corresponding to each distribution road category read out from the differential data management information 52 is not version 2, the CPU 11 reads out the differential data file names corresponding to each distribution road category from the differential data management information 52 and stores the differential data file names of 2A1, 2B1 and 2B2 to the RAM 12 in sequence. The CPU 11 then reads out the differential data corresponding to the differential data file names of 2A1, 2B1 and 2B2 from the updating map information 17 and stores them to the RAM 12 as the differential data to be distributed to the navigation device 2 of the navigation ID of 1001.

In S 113, the CPU 11 selects a distribution ID to identify the extracted differential data and stores it to the RAM 12.

In S114, the CPU 11 stores distribution management information which includes the distribution ID to identify the extracted differential data, the block ID to represent each block of the area subject to distribute corresponding to the differential data, and the updated version for each distribution road category of each block ID to the distribution management information database 19.

One of the examples of the distribution management information stored in the distribution management information database 19 is described referring to FIG. 8. FIG. 8 is a chart showing one example of distribution management information 54 corresponding to each piece of the extracted differential data of the area subject to distribute shown in FIG. 7.

As indicated in FIG. 8, the CPU 11 selects the data of T00001 as the distribution ID to identify the differential data corresponding to the extracted differential data file names of 2A1, 2B1 and 2B2, and stores the aforementioned data of T00001 as the distribution ID of the distribution management information 54. The CPU 11 stores the block IDs of A, B and B which represent the blocks of the area subject to distribute corresponding to the differential data file names of 2A1, 2B1 and 2B2, respectively, as the block ID of the distribution management information 54. The CPU 11 stores the distribution road categories of high standard, high standard and ordinary which represent the distribution road categories corresponding to the differential data file names of 2A1, 2B1 and 2B2, respectively, as the distribution road category of the distribution management information 54. The CPU 11 stores the version of 2 corresponding to the differential data file names of 2A1, 2B1 and 2B2 as the version of the distribution management information 54.

In S 115, the CPU 11 reads out the differential data extracted in S 112 and the distribution ID given to the differential data in S113 from the RAM 12 and distributes them to the navigation device 2.

For example, as indicated in FIG 8, the CPU 11 distributes the differential data corresponding to the differential data file names of 2A1, 2B1 and 2B2, and the distribution ID of T00001 given to the differential data to the navigation device 2.

Meanwhile, as indicated in FIG. 4, the CPU 41 in the navigation device 2, when receiving the differential data and the distribution ID from the map information distribution center 3 via the communication device 27 in S12, stores the differential data and the distribution ID to the RAM 42.

In S13, the CPU 41 reads out the received differential data from the RAM 12 and updates the map information of the area subject to distribute in the navigation map information 38 to the map information of the latest version.

Then, in S 14, the CPU 41 checks the updating of map information of the area subject to distribute in the navigation map information 38 and judges whether there is any errors in updating map information or not. When there is no error in updating map information of the area subject to distribute in the navigation map information 38, more specifically, when the update of map information of the area subject to distribute is successful (S14: YES), the CPU 41 moves on to the process in S15. In S15, the CPU 41 reads out the distribution ID received in S12 from the RAM 42, notifies the success of updating the navigation map information 38 by transmitting the distribution ID together with the navigation ID which has been transmitted to the map information distribution center 3 in S11 above to identify the aforementioned navigation device 2 to the map information distribution center 3, and then finishes the relevant process.

For example, when there is no error in updating map information in the block IDs of A and B of the area subject to distribute in the navigation map information 38 (S14: YES), the CPU 41 notifies the success of updating the navigation map information 38 by transmitting the distribution ID of T00001 received in S12 and the navigation ID of 1001 to identify the aforementioned navigation device 2 which has been transmitted to the map information distribution center 3 in S 11 above to the map information distribution center 3, and then finishes the relevant process.

Meanwhile, when there is an error in updating map information of the area subject to distribute in the navigation map information 38, more specifically, when updating map information of the area subject to distribute is failed (S14: NO), the CPU 41 moves on to the process in S16. In S16, the CPU 41 notifies the failure of updating the navigation map information 38 by transmitting only the navigation ID which has been transmitted to the map information distribution center 3 in S11 above to identify the aforementioned navigation device 2 to the map information distribution center 3, and then finishes the relevant process.

For example, the CPU 41 notifies the failure of updating the navigation map information 38 by transmitting only the navigation ID of 1001 to identify the aforementioned navigation device 2 which has been transmitted to the map information distribution center 3 in S11 above to the map information distribution center 3, and then finishes the relevant process.

Meanwhile, as indicated in FIG. 4, the CPU 11 in the map information distribution center 3, when the notice of success or failure of updating the navigation map information 38 transmitted from the navigation device 2 is received in S116, stores the aforementioned notice to the RAM 12 and then moves on to the process in S117.

In S117, the CPU 11 reads out the notice from the RAM 12 again and judges whether updating the navigation map information 38 in the navigation device 2 has been successful or not, more specifically, whether both the distribution ID and navigation ID have been received or not. When both the distribution ID and the navigation ID have not been received, more specifically, when only the navigation ID has been received (S117: NO), the CPU 11 judges that updating the navigation map information 38 in the navigation device 2 identified by the aforementioned navigation ID has been failed and finishes the relevant process.

Therefore, for example, when the aforementioned navigation ID is 1001, the navigation updating history information 53 (refer to FIG. 6) corresponding to the navigation device 2 identified by the navigation ID of 1001 is not updated.

Meanwhile, when both the distribution ID and the navigation ID have been received (S117: YES), the CPU 11 judges that updating the navigation map information 38 in the navigation device 2 identified by the aforementioned navigation ID has been successful and moves on to the process in S 118.

In S118, the CPU 11 reads out the distribution ID stored in S116 from the RAM 12 again and reads out the distribution management information corresponding to the distribution ID from the distribution management information database 19, and stores them to the RAM 12. The CPU 11 renews the version of updating history data stored in the navigation updating history information database 15 specified by the navigation ID stored in S 116 to the version corresponding to each distribution road category and block ID of the distribution management information stored in the RAM 12, and then stores them again to the navigation updating history information database 15 and finishes the relevant process. This makes it possible for the updating history data stored in the updating history database 15 which is specified by the navigation ID to reliably agree with the current version information stored in the navigation map information 38 in the navigation device 2 specified by the navigation ID.

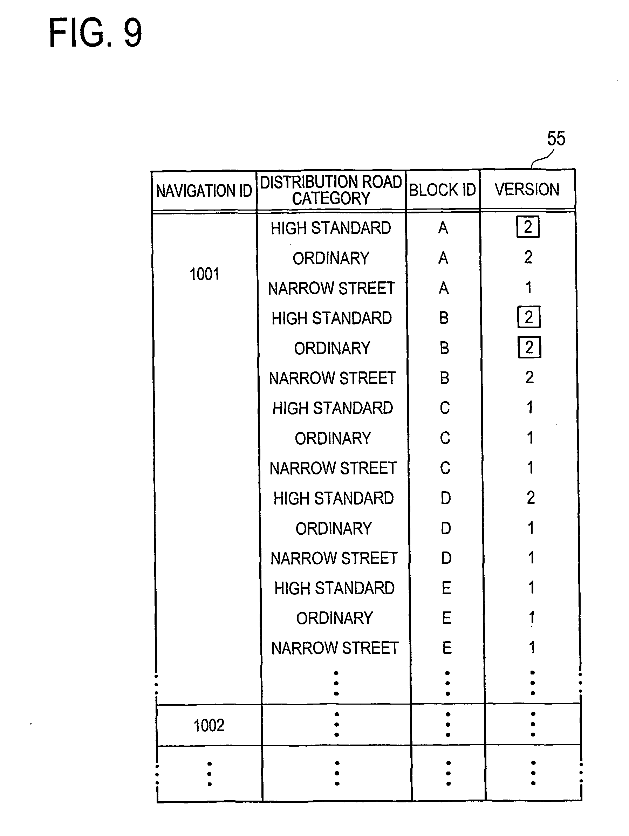

One of the examples of updating the navigation updating history information 53 shown in FIG 6 is described referring to FIGS. 8 and 9. FIG. 9 is a chart showing one example of the updated navigation updating history information 53 shown in FIG. 6 based on the distribution management information 54 shown in FIG 8.

For example, when the distribution ID of T00001 and the navigation ID of 1001 are received in S 116 above, the CPU 11 reads out the versions of 2, 2 and 2 corresponding to the distribution road categories of high standard, high standard and ordinary and the block IDs of A, B and B which correspond to the aforementioned distribution ID of T00001 from the distribution management information 54 (refer to FIG. 8) stored in the distribution management information database 19 and stores them to the RAM 12.

As indicated in FIG. 9, the CPU 11 creates the navigation updating history information 55 by renewing the version in the updating history data 53 (refer to FIG. 6) stored in the updating history database 15 specified by the navigation ID of 1001 stored in S 116 to the versions of 2, 2 and 2 corresponding to the distribution road categories of high standard, high standard and ordinary and the block IDs of A, B and B stored in the distribution management information 54 (refer to FIG. 8) stored in the RAM 12, and stores them again to the navigation updating history information database 15 and then finishes the relevant process.

This makes it possible for the updating history data 55 specified by the navigation ID of 1001 stored in the updating history database 15 to reliably agree with the current version information stored in the navigation map information 38 in the navigation device 2 specified by the navigation ID of 1001.

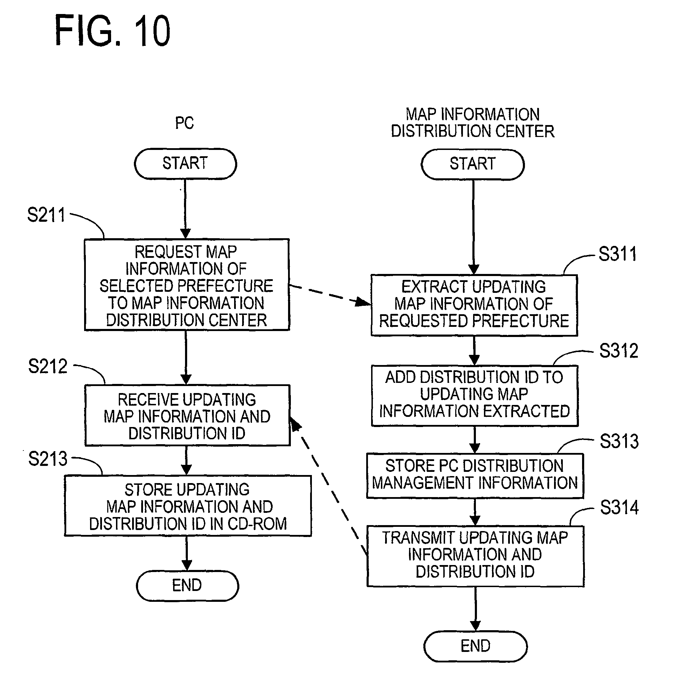

Next, in the map information distribution system 1 having the aforementioned configurations, the process of updating the navigation updating history information stored in the navigation updating history information database 15 in the map information distribution center 3, when the navigation map information 38 in the navigation device 2 is updated based on the updating map information by prefecture which has been distributed to the PC 5 from the aforementioned map information distribution center 3 and recorded on to the CD-ROM 6, is described referring to FIGS. 10 to 15.

The storage medium recording process to record the updating map information by prefecture on to the CD-ROM 6, which is performed by the map information distribution center 3 and the PC 5, is described first referring to FIGS. 10 to 12.
FIG. 10 is a flowchart of the storage medium recording process of recording updating map information by prefecture on to the CD-ROM 6 performed by the map information distribution system 3 and the PC 5 in the map information distribution system 1 of the first embodiment of the present invention. The programs indicated in the flowchart in FIG. 10 are stored in the ROM 13 in the map information distribution center 3 and a ROM 73 not shown in the PC 5, and performed by the CPU 11 in the map information distribution center 3 and a CPU 71 not shown in the PC 5.

As indicated in FIG 10, the CPU 71 in the PC 5 first transmits, in S211, prefecture data which represents the names of prefectures (for example, Tokyo, Osaka, Hokkaido, Aichi and so on) selected by the user and a prefectural unit request signal which requests the updating information (differential data) of map information for each selected prefecture to the map information distribution center 3.

Meanwhile, as indicated in FIG. 10, the CPU 11 in the map information distribution center 3, when receiving the prefecture data which represents prefectures and the prefectural unit request signal which is the request of updating information (differential data) of map information by prefecture transmitted from the PC 5 via the center communication device 16 in S311, stores the prefecture data to the RAM 12.

The CPU 11 reads out the prefecture data again from the RAM 12, sets the prefecture specified by the aforementioned prefecture data as the area subject to distribute (distribution area) by prefecture to extract differential data, then reads out the differential data management information of the latest version in each block within the area subject to distribute (distribution area) by prefecture as mentioned above from the differential data management database 18 and stores them to the RAM 12. Then, the CPU 11 reads out the differential data corresponding to the differential data file names in the differential data management information stored in the RAM 12 from the updating map information 17 and stores them to the RAM 12.

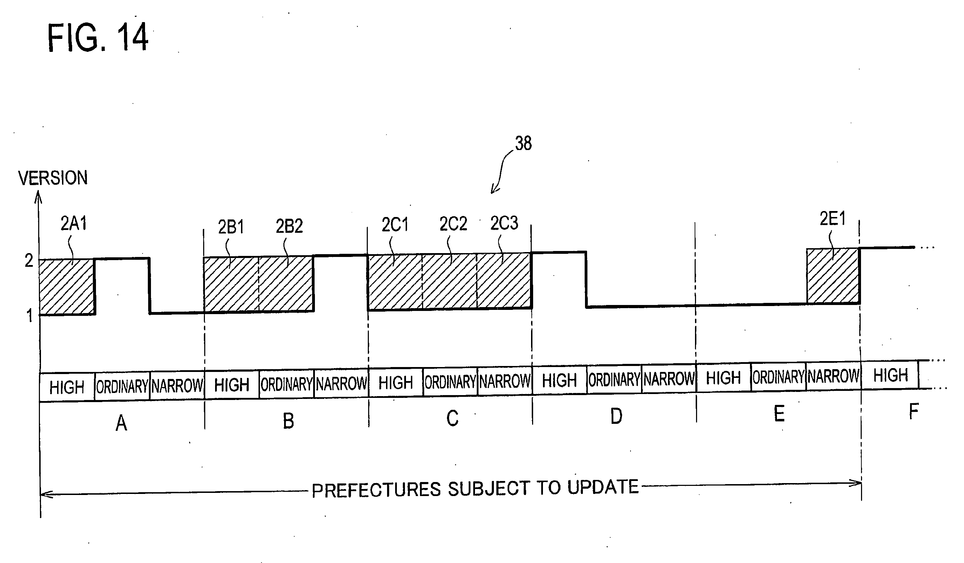

For example, when the prefecture data read out from the RAM 12 is about an X prefecture, the CPU 11 sets the X prefecture as the area subject to distribute (distribution area) by prefecture to extract differential data. When the blocks (mesh) of an approximately 2.5 km square within the area subject to distribute (distribution area) are A, B, C, D and E (refer to FIG. 14), the CPU 11 reads out in sequence the differential data management information (version, block ID, distribution road category and differential data file name) of the latest version corresponding to each block of the block IDs A to E from the differential data management information 52 (refer to FIG. 5) stored in the differential data management database 18, and stores them to the RAM 12. Therefore, the CPU 11 stores the data of "version 2, block A, high standard, 2A1", "version 2, block A, ordinary, 2A2", ... "version 2, block E, narrow street, 2E1", as the differential data management information of the latest version to the RAM 12. Then, the CPU 11 reads out the differential data corresponding to the differential data file names of 2A1, 2A2, 2B1, ... 2E1 in the differential data management information stored in the RAM 12 from the updating map information 17, and stores them to the RAM 12.

To simplify the description, the blocks of an approximately 2.5 km square in the X prefecture set as the area subject to distribute (distribution area) by prefecture are set as five blocks of the block IDs A to E. Although the prefecture data is set as one prefecture as the X prefecture, a plurality of prefectures may be set as the area subject to distribute (distribution area).

In S312, the CPU 11 selects the distribution ID which identifies the extracted differential data by prefecture, and stores it to the RAM 12.

In S313, the CPU 11 creates PC distribution management information which includes distribution ID which identifies the extracted differential data by prefecture, block IDs which represent each block, distribution road categories and versions in the differential data management information of the latest version of each block of the area subject to distribute stored in the RAM 12, and stores it to the distribution management information database 19 as the distribution management information to manage the differential data by prefecture to be distributed to the PC 5.

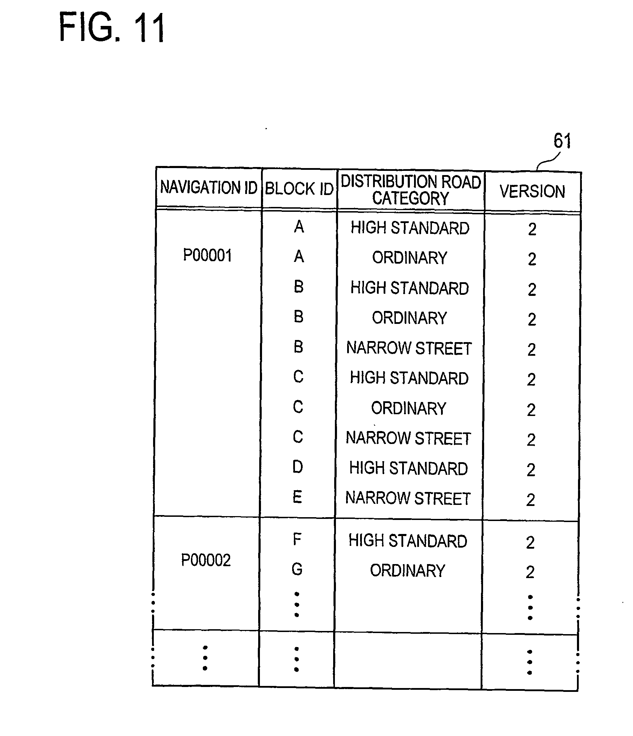

One of the examples of PC distribution management information stored in the distribution management information database 19 is described referring to FIG. 11. FIG. 11 is a chart showing one example of PC distribution management information 61 stored in the distribution management information database 19 in S313 of the flowchart indicated in FIG. 10.

As indicated in FIG. 11, the CPU 11 selects P00001 as the distribution ID which identifies the extracted differential data by prefecture of the X prefecture and stores the P00001 as the distribution ID of the PC distribution management information 61. The CPU 11 reads out the block ID, the distribution road category and the version in sequence from the latest version of differential data management information of the X prefecture stored in the RAM 12 as "version 2, block A, high standard, 2A1", "version 2, block A, ordinary, 2A2", ... "version 2, block E, narrow street, 2E1", and stores them to the distribution management information database 19 by storing them in sequence as the block IDs, distribution road categories and versions of the PC distribution management information 61 corresponding to the distribution ID of P00001.

Therefore, the CPU 11 stores, as the PC distribution management information 61 specified by the distribution ID of P00001, the data of A, A, B, ... E as the block IDs in sequence, the data of high standard, ordinary, high standard, ... narrow street as the distribution road categories in sequence, and the data of 2 as the version in sequence.

In S314, the CPU 11 reads out the block IDs and distribution road categories in the differential data management information of the latest version in each block of the area subject to distribute by prefecture set in S311 above, the differential data corresponding to the block IDs, and the distribution ID which identifies the differential data by prefecture extracted in S312 above from the RAM 12, and then distributes them to the PC 5, and finishes the relevant process after distribution.

For example, the CPU 11 reads out, among the differential data management information by prefecture of the X prefecture, the block IDs of A, A, B, ... E, the distribution road categories of high standard, ordinary, high standard, ... narrow street, the differential data of 2A1, 2A2, 2B1, ... 2E1 corresponding to the differential data file names of 2A1, 2A2, 2B1, ... 2E1, and the distribution ID of P00001 from the RAM 12, and then distributes them to the PC 5, and finishes the relevant process after distribution.

Meanwhile, as indicated in FIG. 10, when receiving the block IDs and distribution road categories of the differential data management information by prefecture, the differential data corresponding to the block IDs, and the distribution ID which identifies the differential data by prefecture from the map information distribution center 3 via the communication device 27 in S212, the CPU 71 in the PC 5 stores these data to the RAM 72 not shown.

In S213, the CPU 71 reads out the received block IDs and distribution road categories of the differential data management information by prefecture, the differential data corresponding to the block IDs, and the distribution ID which specifies the differential data by prefecture in sequence from the RAM 72, and records them on to the CD-ROM 6 via the recorder 5A so as to be readable by the CPU 41 in the navigation device 2 via the reader 28 as the updating map information by prefecture, and then finishes the relevant process.

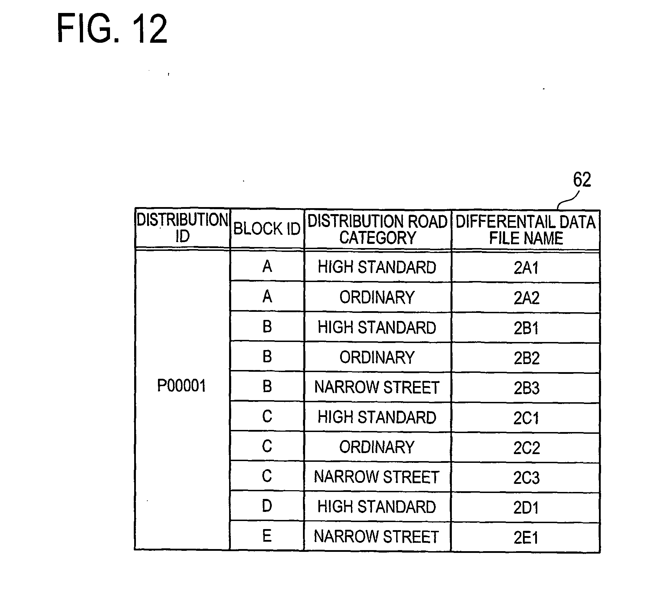

One of the examples of updating map information by prefecture recorded on to the CD-ROM 6 is described referring to FIG 12. FIG. 12 is a chart showing one example of updating map information by prefecture recorded on the CD-ROM 6 in S213 of the flowchart indicated in FIG. 10.

When the block IDs of "A, A, B, ... E" of the differential data management information by prefecture of the X prefecture, the distribution road categories of "high standard, ordinary, high standard, ... narrow street", the differential data of "2A1, 2A2, 2B1, ... 2E1", and the distribution ID of P00001 are distributed from the map information distribution center 3 to the PC 5, as indicated in FIG 12, the CPU 71 in the PC 5 creates the updating map information 62 by prefecture which stores P00001 as the distribution ID, "A, A, B, ... E" as the block IDs in sequence, "high standard, ordinary, high standard, ... narrow street" as the distribution road categories in sequence, and "2A1, 2A2, 2B1, ... 2E1" as the differential data in sequence, and records the updating map information 62 by prefecture on to the CD-ROM 6 via the recorder 5A so as to be readable by the CPU 41 in the navigation device 2 via the reader 28.

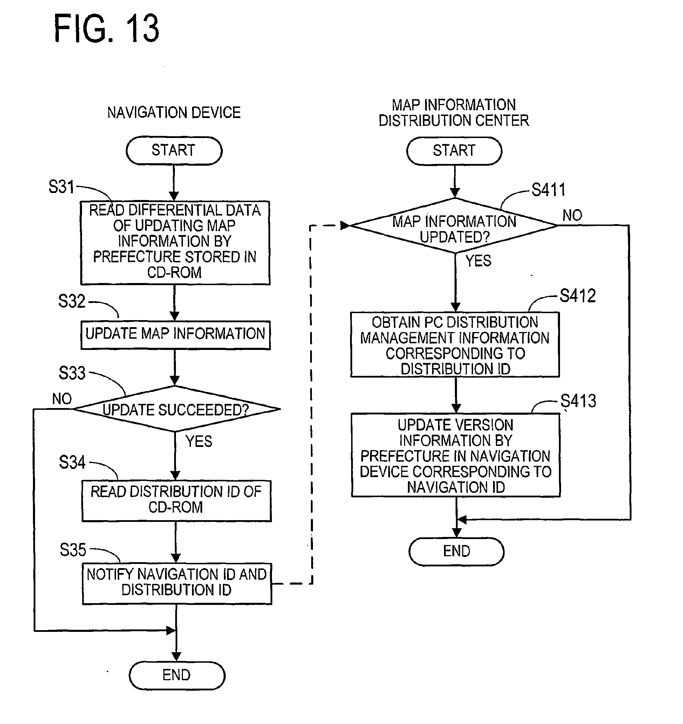

Next, when the navigation map information 38 in the navigation device 2 is updated based on the updating map information by prefecture which has been recorded on to the CD-ROM 6 prepared in the storage medium recording process indicated in FIG 10, the process of updating the navigation updating history information stored in the navigation updating history information database 15 in the aforementioned map information distribution center 3 is described referring to FIGS. 13 to 15.

FIG 13 is a flowchart of an updating process of the navigation updating history information stored in the navigation updating history information database 15 in the aforementioned map information distribution center 3 when the navigation map information 38 in the navigation device 2 is updated via the CD-ROM 6 prepared in the storage medium recording process indicated in FIG 10. The programs indicated in the flowchart in FIG. 13 are stored in the ROM 43 in the navigation device 2 and the ROM 13 in the map information distribution center 3, and executed by the respective CPUs 41 and 11.

As indicated in FIG. 13, the CPU 41 in the navigation device 2 first reads out, in S31, the block IDs, distribution road categories and the differential data corresponding to the block IDs from the updating map information by prefecture recorded on the CD-ROM 6 via the reader 28 and stores them to the RAM 42.

In S32, the CPU 41 judges whether the current version of the map information of the area subject to distribute by prefecture in the navigation map information 38 corresponding to each distribution road category of the block IDs stored in the RAM 42 is older than the latest version of each piece of the differential data stored in the aforementioned RAM 42 or not. When the version is older, the CPU 41 updates the map information based on the corresponding differential data of the latest version.

One of the examples of the updated navigation map information 38 in the navigation device 2 via the CD-ROM 6 in which the updating map information 62 by prefecture shown in FIG. 12 is recorded is described referring to FIG. 14.

FIG. 14 is an illustration describing one example of the updated navigation map information 38 in the navigation device 2 via the CD-ROM 6 in which the updating map information 62 by prefecture shown in FIG. 12 is recorded.

As indicated in FIG. 14, the CPU 41 first judges whether the version corresponding to the distribution road category of high standard in the block ID of A in the navigation map information 38 is version 2 or not based on the updating map information 62 by prefecture which has been read out from the CD-ROM 6 and stored in the RAM 42. When the version is not version 2, the CPU 41 updates the map information corresponding to the distribution road category of high standard in the block ID of A in the navigation map information 38 to version 2 based on the differential data 2A1 stored in the RAM 42.

Next, the CPU 41 judges whether the version corresponding to the distribution road category of ordinary in the block ID of A in the navigation map information 38 is version 2 or not based on the updating map information 62 by prefecture stored in the RAM 42. When the version is version 2, the map information of the distribution road category of ordinary in the block ID of A in the navigation map information 38 is not updated. The CPU 41 updates, in similar manners based on the updating map information 62 by prefecture stored in the RAM 42, the map information of the distribution road categories of high standard and ordinary in the block ID of B, the distribution road categories of high standard, ordinary and narrow street in the block ID of C, and the distribution road category of narrow street in the block ID of E in the navigation map information 38 to the latest version of version 2 based on the differential data of 2B1, 2B2, 2C1 to 2C3 and 2E1, respectively.

In S33, the CPU 41 checks the updating of map information of the area subject to distribute by prefecture in the navigation map information 38 updated in S32 above and judges whether there is any errors in updating map information or not. When there is an error in updating map information in the area subject to distribute by prefecture in the navigation map information 38, more specifically, when updating map information in the area subject to distribute by prefecture is failed (S33: NO), the CPU 41 notifies the failure of updating map information to the user and finishes the relevant process.

Meanwhile, when there is no error in updating map information in the area subject to distribute by prefecture in the navigation map information 38, more specifically, when updating map information in the area subject to distribute by prefecture is successful (S33: YES), the CPU 41 moves on to the process in S34. In S34, the CPU 41 reads out the distribution ID stored in the CD-ROM 6 and stores it to the RAM 42.

For example, when the CD-ROM 6 stores the updating map information 62 by prefecture shown in FIG 12, the CPU 41 reads out the distribution ID of P00001 and stores it to the RAM 42.

In S35, the CPU 41 reads out the distribution ID again from the RAM 42, notifies the updating of the navigation map information 38 via the CD-ROM 6 by transmitting the distribution ID together with the navigation ID which has been transmitted to the map information distribution center 3 in S 11 above and identifies the aforementioned navigation device 2 to the map information distribution center 3, and then finishes the relevant process.

For example, the CPU 41 notifies the updating of the navigation map information 38 via the CD-ROM 6 by transmitting the distribution ID of P00001 stored in the RAM 42 in S34 and the navigation ID of 1001 which identifies the aforementioned navigation device 2 and has been transmitted to the map information distribution center 3 in S 11 above to the map information distribution center 3, and then finishes the relevant process.

Meanwhile, as indicated in FIG. 13, the CPU 11 in the map information distribution center 3 judges, in S411, whether the notice of updating the navigation map information 38 from the navigation device 2 has been received or not, more specifically, whether the distribution ID and the navigation ID have been received or not. When the distribution ID and the navigation ID are not received (S411: NO), the CPU 11 finishes the relevant process.

Therefore, for example, the navigation updating history information 53 (refer to FIG. 6) corresponding to the navigation device 2 specified by the navigation ID of 1001 is not updated.

Meanwhile, when the distribution ID and the navigation ID are received (S411: YES), the CPU 11 judges that the navigation map information 38 in the navigation device 2 specified by the aforementioned navigation ID has been updated, stores the distribution ID and the navigation ID to the RAM 12, and then moves on to the process in S412.

In S412, the CPU 11 reads out the distribution ID from the RAM 12 again, reads out the PC distribution management information corresponding to the distribution ID from the distribution management information database 19, and stores them to the RAM 12.

In S413, the CPU 11 renews the version of updating history data stored in the navigation updating history information database 15 specified by the navigation ID stored in S411 to the version corresponding to each distribution road category and block ID in the PC distribution management information stored in the RAM 12, then stores them again to the navigation updating history information database 15, and finishes the relevant process. This makes it possible for the updating history data stored in the updating history database 15 which is specified by the navigation ID to reliably agree with the current version information stored in the navigation map information 38 in the navigation device 2 specified by the navigation ID which has been updated based on the updating map information stored in the CD-ROM 6.

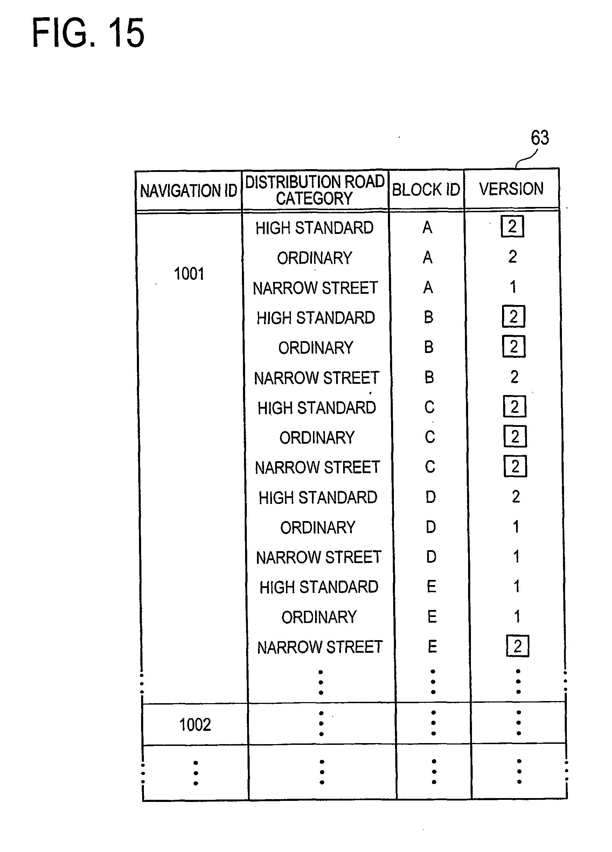

One of the examples of updating the navigation updating history information 53 shown in FIG. 6 is described referring to FIGS. 11 and 15. FIG. 15 is a chart showing one example of the updated navigation updating history information 53 shown in FIG. 6 based on the PC distribution management information 61 shown in FIG. 11.

For example, when receiving the distribution ID of P00001 and the navigation ID of 1001 in S411 above, the CPU 11 reads out the versions of "2, 2, 2, ... 2" corresponding to the block ID data of "A, A, B, ... E" and the distribution road categories of "high standard, ordinary, high standard, ... narrow street" corresponding to the aforementioned distribution ID of P00001 from the PC distribution management information 61 (refer to FIG. 11) stored in the distribution management information database 19, and stores them to the RAM 12.

As indicated in FIG 15, the CPU 11 creates the navigation updating history information 63 by renewing the version of the updating history data 53 (refer to FIG. 6) stored in the updating history database 15 specified by the navigation ID of 1001 stored in S411 to the versions of "2, 2, 2, ... 2" corresponding to the block IDs of "A, A, B, ... E" and the distribution road categories of "high standard, ordinary, high standard, ... narrow street" in the PC distribution management information 61 (refer to FIG 11) stored in the RAM 12, stores them in the updating history database 15 again, and then finishes the relevant process.

This makes it possible for the updating history data 63 specified by the navigation ID of 1001 stored in the updating history database 15 to reliably agree with the current version information stored in the navigation map information 38 in the navigation device 2 specified by the navigation ID of 1001 which has been updated based on the updating map information 62 by prefecture (refer to FIG. 12) stored in the CD-ROM 6.

As described in details above, in the map information distribution center 3 of the first embodiment of the present invention, when receiving the coordinate data and home flag together with the navigation ID which specifies the navigation device 2, the CPU 11 sets the first area centered by the coordinate data of the registered home position as the area subject to distribute while the home flag is ON, and sets the second area centered by the coordinate data of a destination as the area subject to distribute while the home flag is OFF (S11 and S111). The CPU 11 extracts the differential data between the current version in the navigation device 2 and the latest version of each block of the area subject to distribute, by reading out the data relating to the updating history of the area subject to distribute in the navigation device 2 specified by the navigation ID from the navigation updating history information database 15, and the current version of each block (mesh) of an approximately 2.5 km square in the area subject to distribute in distribution road categories of high standard, ordinary and narrow street in the navigation device 2, as well as the differential data file name which represents the differential data of the latest version in each distribution road category of the blocks in the area subject to distribute from the differential data management database 18 (S113). Next, the CPU 11 selects a distribution ID which identifies the differential data extracted and stores the distribution management information which includes the distribution ID, the block ID which represents each block of the area subject to distribute corresponding to the differential data, and the updated version of the distribution road categories in each block ID to the distribution management information database 19, and then transmits the distribution ID and the differential data to the navigation device 2 (S 114 to S 115).

Meanwhile, the CPU 41 in the navigation device 2, when the navigation map information 38 is updated based on the received differential data, transmits the received distribution ID and the navigation ID which identifies the aforementioned navigation device 2 to the map information distribution center 3 (S 12 to S 16).

The CPU 11 in the map information distribution center 3, when receiving the distribution ID and the navigation ID, judges as the navigation map information 38 in the navigation device 2 has been updated, and updates the updating history data specified by the navigation ID stored in the updating history database 15 by reading out the distribution management information corresponding to the distribution ID from the distribution management information database 19 and renewing the version of updating history data stored in the updating history database 15 specified by the navigation ID to the version corresponding to the distribution road categories and the block IDs in the distribution management information (S 116 to S 118).

This makes it possible for the map information distribution center 3, when the coordinate data and home flag are received together with the navigation ID from the navigation device 2, to extract the differential data between the current version of the navigation device 2 in each block in the area subject to distribute and the latest version in each distribution road category and transmit them to the navigation device 2 by reading out the differential data file name which represents the differential data of the latest version in distribution road categories of each block in the area subject to distribute from the differential data management database 18, as the version information in the navigation map information 38 stored in each navigation device 2 is managed in units of distribution road categories of high standard, ordinary and narrow street in the block (mesh) of an approximately 2.5 km square. As it is possible for the map information distribution center 3, when the map information in the distribution road category of high standard, which relates to national expressways, city expressways, and national roads of single and double digit numbers, and the like in each block of the navigation map information 38 stored in the data recorder 22 of the navigation device 2 has already been updated to the latest version, to extract and transmit the differential data of bare minimum amount relating to updates of the distribution road categories of ordinary and narrow street to the navigation device 2 excluding the map information relating to the high standard. This makes it possible to reduce the amount of communication data with the navigation device 2.

Only a home flag, coordinate data and a navigation ID are needed to be transmitted as updating request data from the navigation device 2 to the map information distribution center 3 when the navigation device 2 requests differential data from the map information distribution center 3. This makes it possible to further reduce the amount of communication data transmitted for updating the navigation map information 38 in the navigation device 2.

The map information distribution center 3, when receiving the distribution ID which has been transmitted together with differential data and the navigation ID which specifies the navigation device 2, updates by reading out the distribution management information corresponding to the distribution ID from the distribution management information database 19 and renewing the version of the updating history data specified by the navigation ID stored in the updating history database 15 to the version corresponding to each block ID and distribution road category of the distribution management data. This makes it possible to accurately manage the updating history of version information in each distribution road category corresponding to each block ID of the navigation map information 38 stored in the data recorder 22 of the navigation device 2 and to accurately manage the version information in each distribution road category corresponding to each block ID of the navigation map information 38 currently stored in the navigation device 2.

As described in details above, in the map information distribution system 1 of the first embodiment of the present invention, when receiving the coordinate data and home flag together with the navigation ID which specifies the navigation device 2, the CPU 11 of the map information distribution center 3 sets the first area centered by the coordinate data of the registered home position as the area subject to distribute while the home flag is ON, and sets the second area centered by the coordinate data of a destination as the area subject to distribute while the home flag is OFF (S11 and S111). The CPU 11 extracts the differential data between the current version in the navigation device 2 and the latest version of each block of the area subject to distribute, by reading out the data relating to the updating history of the area subject to distribute in the navigation device 2 specified by the navigation ID from the navigation updating history information database 15, as well as the differential data file name which represents the differential data of the latest version of the blocks in the area subject to distribute from the differential data management database 18 (S113). Next, the CPU 11 selects a distribution ID which identifies the differential data extracted, stores the distribution management information which includes the distribution ID and the differential data to the distribution management information database 19, and then transmits the distribution ID and the differential data to the navigation device 2 (S 114 to S 115).

Meanwhile, the CPU 41 in the navigation device 2, when the navigation map information 38 is updated based on the received differential data, transmits the received distribution ID and the navigation ID which identifies the aforementioned navigation device 2 to the map information distribution center 3 (S 12 to S 16).

The CPU 11 in the map information distribution center 3, when receiving the distribution ID and the navigation ID, judges as the navigation map information 38 in the navigation device 2 has been updated, and updates the updating history data specified by the navigation ID stored in the updating history database 15 by reading out the distribution management information corresponding to the distribution ID from the distribution management information database 19 (S 116 to S 118).

When the navigation device 2 requests updating of map information to the map information distribution center 3, only a home flag which is set either ON or OFF, coordinate data and the navigation ID are needed to be transmitted from the navigation device 2 to the map information distribution center 3. This makes it possible to reduce the amount of communication data transmitted for updating the navigation map information 38 in the navigation device 2.

When receiving the distribution ID which has been transmitted together with differential data and the navigation ID which specifies the navigation device 2, the map information distribution center 3 updates updating history data specified by the navigation ID stored in the updating history database 15 by reading out the distribution management information corresponding to the distribution ID from the distribution management information database 19. This makes it possible to accurately manage the updating history of the navigation map information 38 stored in the data recorder 22 of the navigation device 2 and to accurately manage the version information of the navigation map information 38 currently stored in the navigation device 2.

Since it is possible for the map information distribution center 3 to accurately manage the updating history of navigation map information 38 stored in the data recorder 22 of the navigation device 2, when receiving a home flag, coordinate data and the navigation ID as updating request data from the navigation device 2, it is possible to extract the bare minimum amount of the differential data for updating the navigation map information 38 in the navigation device 2. This makes it possible to further reduce the amount of communication data transmitted for updating the navigation map information 38 in the navigation device 2.

The CPU 11 in the map information distribution center 3, when receiving prefecture data which represents prefectures and a prefectural unit requesting signal from the PC 5, sets the prefecture specified by the prefecture data as the area subject to distribute, reads out the differential data management information of the latest version of each block in the area subject to distribute by prefecture from the differential data management database 18, reads out each piece of the differential data from the updating map information 17 based on the read differential data management data, and stores them to the RAM 12 (S211 and S311). The CPU 11 selects a distribution ID which identifies the extracted differential data by prefecture, creates PC distribution management data, stores it to the distribution management information database 19 as distribution data management data to manage the differential data by prefecture to be distributed to the PC 5, and then transmits the distribution ID and the updating information which includes the differential data of the area subject to distribute by prefecture to the PC 5 (S312 to S314). Meanwhile, the PC 5 records the distribution ID received and updating map information which includes the differential data of the area subject to distribute by prefecture on to the CD-ROM 6 (S212 to S213).

.

Meanwhile, the CPU 41 in the navigation device 2 reads out the updating map information from the CD-ROM 6 via a reader 28, and when the navigation map information 38 is updated, notifies the update of navigation map information 38 by the CD-ROM 6 by reading out the distribution ID from the CD-ROM 6 and transmitting it together with the navigation ID which identifies the navigation device 2 to the map information distribution center 3 (S31 to S35). The CPU 11 in the map information distribution center 3, when receiving the distribution ID and navigation ID, reads out the PC distribution management information corresponding to the distribution ID from the distribution management information database 19. The CPU 11 updates by renewing the version of updating history data stored in the updating history database 15 specified by the navigation ID to the version corresponding to each of the block IDs and distribution road categories in the PC distribution management information (S411 to S413).

This makes it possible for the CPU 41 in the navigation device 2, by reading out the updating map information from the CD-ROM 6 via the reader 28 and updating the navigation map information 38 of the area subject to distribute by prefecture, to update the navigation map information 38 of the area subject to distribute by prefecture to the map information of the latest version.

The CPU 41 in the navigation device 2, when the navigation map information 38 of the area subject to distribute by prefecture is updated by reading out the updating map information from the CD-ROM 6 via the reader 28, transmits the distribution ID read out from the CD-ROM 6 and the navigation ID which identifies the navigation device 2 to the map information distribution center 3. Accordingly, the map information distribution center 3 updates by renewing the version of updating history data specified by the navigation ID received to the version corresponding to each of the block IDs and distribution road categories of the PC distribution management information corresponding to the distribution ID received. This makes it possible for the map information distribution center 3, even when the CPU 41 in the navigation device 2 updates the navigation map information 38 via the CD-ROM 6, to accurately manage the updating history of the navigation map information 38 stored in the data recorder 22 in the navigation device 2, and to even more accurately manage the version information of the navigation map information 38 currently stored in the navigation device 2.

Since it is possible for the map information distribution center 3 to accurately manage the updating history of the navigation map information 38 stored in the navigation device 2, even when the CPU 41 in the navigation device 2 updates the navigation map information 38 via the CD-ROM 6, when receiving a home flag, coordinate data and navigation ID as updating request data from the navigation device 2, it is possible to accurately extract the bare minimum amount of the differential data for updating the navigation map information 38 in the navigation device 2. It makes it possible to further reduce the amount of communication data transmitted for updating the navigation map information 38 in the navigation device 2.

The present invention is not limited to the preferred embodiment described above, and various improvements and modifications may naturally be made within the scope of the invention.

## Claims

1. A map information distribution center (3) comprising:
a map information storage (14) storing map information for each version;
a version information storage (15) storing, by correlating with identification information identifying an individual navigation device (2), version information for each road category of the map information stored in the navigation device (2);
a receiving section (16) receiving the identification information from the navigation device (2);
an extracting section (11) obtaining, based on the identification information received, the version information for each road category of the map information stored in the navigation device (2) corresponding to the identification information from the version information storage (15), and extracting, based on the version information for each road category obtained, differential data for each road category with map information of the latest version from the map information storage (14); and
a transmitting section (16) transmitting the differential data for each road category extracted by the extracting section (11) to the navigation device (2) corresponding to the identification information received by the receiving section (16).

2. The map information distribution center (3) according to claim 1, wherein as the receiving section (16) receives area updating request information for requesting updating information corresponding to a predefined area of the map information together with the identification data, the extracting section (11) obtains, based on the identification information received, the version information for each road category corresponding to the predefined area out of the version information for each road category of the map information stored in the navigation device (2) corresponding to the identification data, and extracts, based on the version information for each road category obtained, differential data for each road category with the map information of the latest version from the map information storage (14).

3. The map information distribution center (3) according to claim 1 or 2, further comprising:
a version information updating section (11) updating, as the receiving section (16) receives, from the navigation device (2) to which the transmitting section (16) transmits the differential data for each road category, updating completion information representing completion of map information updating based on the differential data, version information for each road category of the map information stored in the navigation device (2) and stored in the version information storage (15) based on the differential data transmitted.

4. The map information distribution center (3) according to any one of claims 1 to 3, wherein
the map information is divided into a mesh unit of a predetermined region,
the version information storage (15) stores the version information for each road category in the mesh unit, and
the extracting section (11) extracts the differential data for each road category in the mesh unit.

5. A map information distribution method comprising:
a receiving step wherein a map information distribution center (3) receives from a navigation device (2) identification information identifying the navigation device (2);
an extracting step wherein the map information distribution center (3) obtains, based on the identification information received in the receiving step, version information for each road category of map information stored in the navigation device (2) corresponding to the identification information from a version information storage (15) storing, by correlating with identification information identifying an individual navigation device (2), version information for each road category of the map information stored in the navigation device (2), so as to extract, based on the version information for each road category obtained, differential data for each road category with map information of the latest version from a map information storage (14); and
a transmitting step wherein the map information distribution center (3) transmits the differential data for each road category extracted in the extracting step to the navigation device (2) corresponding to the identification information received in the receiving step.

6. A map information distribution system (1) comprising:
a navigation device (2) updating map information based on updating information received; and
a map information distribution center (3) according to claim 1 distributing updating information to the navigation device (2), wherein
the extracting section (11) corresponds to a first extracting section (11),
the transmitting section (16) corresponds to a first updating information transmitting section (16); the navigation device (2) comprising:
a request data transmitting section (27) transmitting updating request data for requesting updating information for a predefined area of the map information and identification information identifying the navigation device (2) to the map information distribution center (3); the map information distribution center (3) further comprising:
a request data receiving section (16) receiving the updating request data and the identification data;
the first extracting section (11) obtaining, based on the identification information received, the version information of the map information in the predefined area stored in the navigation device (2) the first updating information transmitting section (16) transmitting first distribution identification information identifying the differential data to the navigation device (2) corresponding to the identification information received by the request data receiving section (16);
an identification information receiving section (16) receiving the first distribution identification information and the identification data; and
a first version information update controller (11) controlling to obtain, based on the identification information received, the version information of the map information stored in the navigation device (2) corresponding to the identification information from the version information storage (15), and controlling to update, based on the first distribution identification information received, version information of the predefined area out of the version information obtained; the navigation device (2) further comprising:
an updating information receiving section (27) receiving the differential data and the first distribution identification data; and
a first update controller (41) controlling to update the map information of the predefined area based on the differential data received, and upon updating of the map information of the predefined area, controlling to transmit the first distribution identification information received and the identification information to the map information distribution center (3).

7. The map information distribution system (1) according to claim 6, wherein the navigation device (2) further comprises:
a vehicle status detector detecting a vehicle status;
a destination setting section (24) for setting a destination;
an updating spot storage (37) storing a pre-registered updating spot; and
a flag setting section (41) for setting ON/OFF of a coordinate flag; the request data transmitting section (27) transmits a coordinate flag set to ON and a coordinate position of the updating spot as the updating request data as the vehicle status detected by the vehicle status detector is at engine start, and transmits a coordinate flag set to OFF and a coordinate position of the destination as the updating request data as the vehicle status detected by the vehicle status detector is at destination setting, and the map information distribution center (3) comprises:
an area selection section (11) selecting, as the request data receiving section (16) receives the coordinate flag set to ON and the coordinate position, a first area centered by the coordinate position as the predefined area, and selecting, as the request data receiving section (16) receives the coordinate flag set to OFF and the coordinate position, a second area centered by the coordinate position as the predefined area.

8. The map information distribution system (1) according to claim 6 or 7, wherein the navigation device (2) further comprises:
a reader (28) reading map information relating to a predefined distribution area and second distribution identification information identifying the map information from a storing medium (6) storing the map information and the second distribution identification data; and
a second update controller (41) controlling to update the map information of the distribution area based on the map information read by the reader (28), and upon updating of the map information of the distribution area, controlling to transmit the second distribution identification information and the identification information read by the reader (28) to the map information distribution center (3); the map information distribution center (3) further comprises:
a second extracting section (11) extracting map information of the latest version of the distribution area from the map information storage (14) as the request data receiving section (16) receives updating request data from a communication terminal for requesting updating information for the distribution area of the map data;
a second updating information transmitting section (16) transmitting the map information of the distribution area extracted by the second extracting section (11) and second distribution identification information identifying the map information to the communication terminal; and
a second version information update controller (11) controlling to obtain, as the identification information receiving section (16) receives the second distribution identification information and the identification data, based on the identification information received, the version information of the map information stored in the navigation device (2) corresponding to the identification information from the version information storage (15), and controlling to update, based on the second distribution identification information received, version information of the distribution area out of the version information obtained; and the communication terminal comprises:
a recorder (5A) recording, in a manner readable by the reader (28), the map information of the received distribution area and the second distribution identification information in the storing medium (6).

9. A map information distribution method according to claim 5 wherein
the receiving step corresponds to a request data receiving step,
the extracting step corresponds to a first extracting step, and
the transmitting step corresponds to a first updating information transmitting step, and wherein a map information distribution center (3) distributes, to a navigation device (2) updating map information based on updating information received, the updating data, the method comprising:
a request data transmitting step wherein the navigation device (2) transmits updating request data for requesting updating information for a predefined area of the map information and identification information identifying the navigation device (2) to the map information distribution center (3);
the request data receiving step wherein the map information distribution center (3) receives the updating request data transmitted in the request data transmitting step;
the first extracting step wherein the map information distribution center (3) obtains, based on the identification information received in the request data receiving step, version information of the map information in the predefined area stored in the navigation device (2) ;
the first updating information transmitting step wherein the map information distribution center (3) transmits first distribution identification information identifying the differential data to the navigation device (2) corresponding to the identification information received in the request data receiving step;
an updating information receiving step wherein the navigation device (2) receives the differential data transmitted in the first updating information transmitting step and a first distribution identification data;
a first update controlling step wherein the navigation device (2) updates the map information of the predefined area based on the differential data received in the updating information receiving step, and upon updating of the map information of the predefined area, controls to transmit the first distribution identification information received and the identification information to the map information distribution center (3);
an identification information receiving step wherein the map information distribution center (3) receives the first distribution identification information transmitted in the first update controlling step and the identification data; and
a first version information update controlling step wherein the map information distribution center (3) obtains, based on the identification information received in the identification information receiving step, version information of the map information stored in the navigation device (2) corresponding to the identification information from the version information storage (15), so as to control to update, based on the first distribution identification information received, version information of the predefined area out of the version information obtained.

## Patentansprüche

1. Karteninformationsverteilungszentrum (3) mit:
einem Karteninformationsspeicher (14), der Karteninformationen für jede Version speichert;
einem Versionsinformationsspeicher (15), der durch Korrelierung mit ein einzelnes Navigationsgerät (2) identifizierenden Identifizierungsinformationen Versionsinformationen für jede Straßenkategorie der in dem Navigationsgerät (2) gespeicherten Karteninformationen speichert;
einem Empfangsabschnitt (16), der die Identifizierungsinformationen von dem Navigationsgerät (2) empfängt;
einem Extrahierungsabschnitt (11), der basierend auf den empfangenen Identifizierungsinformationen die Versionsinformationen für jede Straßenkategorie der in dem den Identifizierungsinformationen entsprechen Navigationsgerät (2) gespeicherten Karteninformationen aus dem Versionsinformationsspeicher (15) erhält, und der basierend auf den erhaltenen Versionsinformationen für jede Straßenkategorie Differenzdaten für jede Straßenkategorie mit Karteninformationen der letzten Version aus dem Karteninformationsspeicher (14) extrahiert; und
einem Übertragungsabschnitt (16), der die durch den Extrahierungsabschnitt (11) extrahierten Differenzdaten für jede Straßenkategorie zu dem den durch den Empfangsabschnitt (16) empfangenen Identifizierungsinformationen entsprechenden Navigationsgerät (2) überträgt.

2. Karteninformationsverteilungszentrum (3) gemäß Anspruch 1, wobei, wenn der Empfangsabschnitt (16) Bereichsaktualisierungsanforderungsinformationen für eine Anforderung von einem vordefinierten Bereich der Karteninformationen entsprechenden Aktualisierungsinformationen zusammen mit den Identifizierungsdaten empfängt, der Extrahierungsabschnitt (11) basierend auf den empfangenen Identifizierungsinformationen die Versionsinformationen für jede dem vordefinierten Bereich entsprechende Straßenkategorie aus den Versionsinformationen für jede Straßenkategorie der in dem den Identifizierungsdaten entsprechenden Navigationsgerät (2) gespeicherten Karteninformationen erhält, und basierend auf den erhaltenen Versionsinformationen für jede Straßenkategorie Differenzdaten für jede Straßenkategorie mit den Karteninformationen der letzten Version aus dem Karteninformationsspeicher (14) extrahiert.

3. Karteninformationsverteilungszentrum (3) gemäß Anspruch 1 oder 2, ferner mit:
einem Versionsinformationsaktualisierungsabschnitt (11), der in dem Versionsinformationsspeicher (15) gespeicherte Versionsinformationen für jede Straßenkategorie der in dem Navigationsgerät (2) gespeicherten Karteninformationen basierend auf den übertragenen Differenzdaten aktualisiert, wenn der Empfangsabschnitt (16) von dem Navigationsgerät (2), zu dem der Übertragungsabschnitt (16) die Differenzdaten für jede Straßenkategorie überträgt, Aktualisierungsabschlussinformationen empfängt, die einen Abschluss einer Karteninformationsaktualisierung basierend auf den Differenzdaten darstellen.

4. Karteninformationsverteilungszentrum (3) gemäß einem der Ansprüche 1 bis 3, wobei
die Karteninformationen in eine Mascheneinheit einer vorbestimmten Fläche aufgeteilt sind,
der Versionsinformationsspeicher (15) die Versionsinformationen für jede Straßenkategorie in der Mascheneinheit speichert, und
der Extrahierungsabschnitt (11) die Differenzdaten für jede Straßenkategorie in der Mascheneinheit extrahiert.

5. Karteninformationsverteilungsverfahren mit:
einem Empfangsschritt, wobei ein Karteninformationsverteilungszentrum (3) Identifizierungsinformationen von einem Navigationsgerät (2) empfängt, die das Navigationsgerät (2) identifizieren;
einem Extrahierungsschritt, wobei das Karteninformationsverteilungszentrum (3) basierend auf den in dem Empfangsschritt empfangenen Identifizierungsinformationen Versionsinformationen für jede Straßenkategorie von in dem den Identifizierungsinformationen entsprechenden Navigationsgerät (2) gespeicherten Karteninformationen aus einem Versionsinformationsspeicher (15) erhält, der durch Korrelierung mit ein einzelnes Navigationsgerät (2) identifizierenden Identifizierungsinformationen Versionsinformationen für jede Straßenkategorie der in dem Navigationsgerät (2) gespeicherten Karteninformationen speichert, um basierend auf den erhaltenen Versionsinformationen für jede Straβenkategorie Differenzdaten für jede Straßenkategorie mit Karteninformationen der letzten Version aus einem Karteninformationsspeicher (14) zu extrahieren; und
einem Übertragungsschritt, wobei das Karteninformationsverteilungszentrum (3) die in dem Extrahierungsschritt extrahierten Differenzdaten für jede Straßenkategorie zu dem den in dem Empfangsschritt empfangenen Identifizierungsinformationen entsprechenden Navigationsgerät (2) überträgt.

6. Karteninformationsverteilungssystem (1) mit:
einem Navigationsgerät (2), das Karteninformationen basierend auf empfangenen Aktualisierungsinformationen aktualisiert; und
einem Karteninformationsverteilungszentrum (3) gemäß Anspruch 1, das Aktualisierungsinformationen zu dem Navigationsgerät (2) verteilt, wobei
der Extrahierungsabschnitt (11) einem ersten Extrahierungsabschnitt (11) entspricht,
der Übertragungsabschnitt (16) einem ersten Aktualisierungsinformationsübertragungsabschnitt (16) entspricht; und wobei das Navigationsgerät (2) umfasst:
einen Anforderungsdatenübertragungsabschnitt (27), der Aktualisierungsanforderungsdaten für eine Anforderung von Aktualisierungsinformationen für einen vordefinierten Bereich der Karteninformationen und das Navigationsgerät (2) identifizierende Identifizierungsinformationen zu dem Karteninformationsverteilungszentrum (3) überträgt; und wobei das Karteninformationsverteilungszentrum (3) ferner umfasst:
einen Anforderungsdatenempfangsabschnitt (16), der die Aktualisierungsanforderungsdaten und die Identifizierungsdaten empfängt;
den ersten Extrahierungsabschnitt (11), der basierend auf den empfangenen Identifizierungsinformationen die Versionsinformationen der in dem Navigationsgerät (2) gespeicherten Karteninformationen in dem vordefinierten Bereich erhält,
den ersten Aktualisierungsinformationsübertragungsabschnitt (16), der die Differenzdaten identifizierende erste Verteilungsidentifizierungsinformationen zu dem den durch den Anforderungsdatenempfangsabschnitt (16) empfangenen Identifizierungsinformationen entsprechenden Navigationsgerät (2) überträgt;
einen Identifizierungsinformationsempfangsabschnitt (16), der die ersten Verteilungsidentifizierungsinformationen und die Identifizierungsdaten empfängt; und
eine erste Versionsinformationsaktualisierungssteuereinheit (11), die eine Steuerung zum Erhalten der Versionsinformationen der in dem den Identifizierungsinformationen entsprechenden Navigationsgerät (2) gespeicherten Karteninformationen aus dem Versionsinformationsspeicher (15) basierend auf den empfangenen Identifizierungsinformationen durchführt, und die eine Steuerung zum Aktualisieren von Versionsinformationen des vordefinierten Bereichs aus den erhaltenen Versionsinformationen basierend auf den empfangenen ersten Verteilungsidentifizierungsinformationen durchführt; und wobei das Navigationsgerät (2) ferner umfasst:
einen Aktualisierungsinformationsempfangsabschnitt (27), der die Differenzdaten und die ersten Verteilungsidentifizierungsdaten empfängt; und
eine erste Aktualisierungssteuereinheit (41), die eine Steuerung zum Aktualisieren der Karteninformationen des vordefinierten Bereichs basierend auf den empfangenen Differenzdaten durchführt, und die nach Aktualisieren der Karteninformationen des vordefinierten Bereichs eine Steuerung zum Übertragen der empfangenen ersten Verteilungsidentifizierungsinformationen und der Identifizierungsinformationen zu dem Karteninformationenverteilungszentrum (3) durchführt.

7. Karteninformationsverteilungssystem (1) gemäß Anspruch 6, wobei das Navigationsgerät (2) ferner umfasst:
eine Fahrzeugstatuserfassungseinheit, die einen Fahrzeugstatus erfasst;
einen Zieleinstellabschnitt (24) zum Einstellen eines Ziels;
einen Aktualisierungsortspeicher (37), der einen vorregistrierten Aktualisierungsort speichert; und
einen Markereinstellabschnitt (41) zum Einstellen eines Koordinatenmarkers auf EIN/AUS; wobei der Anforderungsdatenübertragungsabschnitt (27) einen auf EIN eingestellten Koordinatenmarker und eine Koordinatenposition des Aktualisierungsortes als die Aktualisierungsanforderungsdaten überträgt, wenn der durch die Fahrzeugstatuserfassungseinheit erfasste Fahrzeugstatus bei einem Motorstart ist, und einen auf AUS eingestellten Koordinatenmarker und eine Koordinatenposition des Ziels als die Aktualisierungsanforderungsdaten überträgt, wenn der durch die Fahrzeugstatuserfassungseinheit erfasste Fahrzeugstatus bei einer Zieleinstellung ist, und wobei das Karteninformationsverteilungszentrum (3) umfasst:
einen Bereichsauswahlabschnitt (11), der, wenn der Anforderungsdatenempfangsabschnitt (16) den auf EIN eingestellten Koordinatenmarker und die Koordinatenposition empfängt, einen durch die Koordinatenposition zentrierten ersten Bereich als den vordefinierten Bereich auswählt, und der, wenn der Anforderungsdatenempfangsabschnitt (16) den auf AUS eingestellten Koordinatenmarker und die Koordinatenposition empfängt, einen durch die Koordinatenposition zentrierten zweiten Bereich als den vordefinierten Bereich auswählt.

8. Karteninformationsverteilungssystem (1) gemäß Anspruch 6 oder 7, wobei das Navigationsgerät (2) ferner umfasst:
eine Leseeinheit (28), die einen vordefinierten Verteilungsbereich betreffende Karteninformationen und die Karteninformationen identifizierende zweite Verteilungsidentifizierungsinformationen aus einem die Karteninformationen und die zweiten Verteilungsidentifizierungsdaten speichernden Speichermedium (6) liest; und
eine zweite Aktualisierungssteuereinheit (41), die eine Steuerung zum Aktualisieren der Karteninformationen des Verteilungsbereichs basierend auf den durch die Leseeinheit (28) gelesenen Karteninformationen durchführt, und die nach Aktualisieren der Karteninformationen des Verteilungsbereichs eine Steuerung zum Übertragen der zweiten Verteilungsidentifizierungsinformationen und der Identifizierungsinformationen, die durch die Leseeinheit (28) gelesen sind, zu dem Karteninformationsverteilungszentrum (3) durchführt; und wobei das Karteninformationsverteilungszentrum (3) ferner umfasst:
einen zweiten Extrahierungsabschnitt (11), der Karteninformationen der letzten Version des Verteilungsbereichs aus dem Karteninformationsspeicher (14) extrahiert, wenn der Anforderungsdatenempfangsabschnitt (16) Aktualisierungsanforderungsdaten von einem Kommunikationsendgerät für eine Anforderung von Aktualisierungsinformationen für den Verteilungsbereich der Kartendaten empfängt;
einen zweiten Aktualisierungsinformationsübertragungsabschnitt (16), der die durch den zweiten Extrahierungsabschnitt (11) extrahierten Karteninformationen des Verteilungsbereichs und die Karteninformationen identifizierende zweite Verteilungsidentifizierungsinformationen zu dem Kommunikationsendgerät überträgt; und
eine zweite Versionsinformationsaktualisierungssteuereinheit (11), die eine Steuerung zum Erhalten der Versionsinformationen der in dem den Identifizierungsinformationen entsprechenden Navigationsgerät (2) gespeicherten Karteninformationen aus dem Versionsinformationsspeicher (15) basierend auf den empfangenen Identifizierungsinformationen durchführt, wenn der Identifizierungsinformationsempfangsabschnitt (16) die zweiten Verteilungsidentifizierungsinformationen und die Identifizierungsdaten empfängt, und die eine Steuerung zum Aktualisieren von Versionsinformationen des Verteilungsbereichs aus den erhaltenen Versionsinformationen basierend auf den empfangenen zweiten Verteilungsidentifizierungsinformationen durchführt; und wobei das Kommunikationsendgerät umfasst:
eine Aufzeichnungseinheit (5A), die auf eine durch die Leseeinheit (28) lesbare Art die Karteninformationen des empfangenen Verteilungsbereichs und die zweiten Verteilungsidentifizierungsinformationen in dem Speichermedium (6) aufzeichnet.

9. Karteninformationsverteilungsverfahren gemäß Anspruch 5, wobei
der Empfangsschritt einem Anforderungsdatenempfangsschritt entspricht,
der Extrahierungsschritt einem ersten Extrahierungsschritt entspricht, und
der Übertragungsschritt einem ersten Aktualisierungsinformationsübertragungsschritt entspricht, und wobei ein Karteninformationsverteilungszentrum (3) die Aktualisierungsdaten zu einem Karteninformationen basierend auf empfangenen Aktualisierungsinformationen aktualisierenden Navigationsgerät (2) verteilt, wobei das Verfahren umfasst:
einen Anforderungsdatenübertragungsschritt, wobei das Navigationsgerät (2) Aktualisierungsanforderungsdaten für eine Anforderung von Aktualisierungsinformationen für einen vordefinierten Bereich der Karteninformationen und das Navigationsgerät (2) identifizierende Identifizierungsinformationen zu dem Karteninformationsverteilungszentrum (3) überträgt;
den Anforderungsdatenempfangsschritt, wobei das Karteninformationsverteilungszentrum (3) die in dem Anforderungsdatenübertragungsschritt übertragenen Aktualisierungsanforderungsdaten empfängt;
den ersten Extrahierungsschritt, wobei das Karteninformationsverteilungszentrum (3) basierend auf den in dem Anforderungsdatenempfangsschritt empfangenen Identifizierungsinformationen Versionsinformationen der in dem Navigationsgerät (2) gespeicherten Karteninformationen in dem vordefinierten Bereich erhält;
den ersten Aktualisierungsinformationsübertragungsschritt, wobei das Karteninformationsverteilungszentrum (3) die Differenzdaten identifizierende erste Verteilungsidentifizierungsinformationen zu dem den in dem Anforderungsdatenempfangsschritt empfangenen Identifizierungsinformationen entsprechenden Navigationsgerät (2) überträgt;
einen Aktualisierungsinformationsempfangsschritt, wobei das Navigationsgerät (2) die in dem ersten Aktualisierungsinformationsübertragungsschritt übertragenen Differenzdaten und erste Verteilungsidentifizierungsdaten empfängt;
einen ersten Aktualisierungssteuerschritt, wobei das Navigationsgerät (2) die Karteninformationen des vordefinierten Bereichs basierend auf den in dem Aktualisierungsinformationsempfangsschritt empfangenen Differenzdaten aktualisiert und nach Aktualisieren der Karteninformationen des vordefinierten Bereichs eine Steuerung zum Übertragen der empfangenen ersten Verteilungsidentifizierungsinformationen und der Identifizierungsinformationen zu dem Karteninformationsverteilungszentrum (3) durchführt;
einen Identifizierungsinformationsempfangsschritt, wobei das Karteninformationsverteilungszentrum (3) die in dem ersten Aktualisierungssteuerschritt übertragenen ersten Verteilungsidentifizierungsinformationen und die Identifizierungsdaten empfängt; und
einen ersten Versionsinformationsaktualisierungssteuerschritt, wobei das Karteninformationsverteilungszentrum (3) basierend auf den in dem Identifizierungsinformationsempfangsschritt empfangenen Identifizierungsinformationen Versionsinformationen der in dem den Identifizierungsinformationen entsprechenden Navigationsgerät (2) gespeicherten Karteninformationen aus dem Versionsinformationsspeicher (15) erhält, um eine Steuerung zum Aktualisieren von Versionsinformationen des vordefinierten Bereichs aus den erhaltenen Versionsinformationen basierend auf den empfangenen ersten Verteilungsidentifizierungsinformationen durchzuführen.

## Revendications

1. Centre de distribution d'informations cartographiques (3) comprenant :
une mémoire d'informations cartographiques (14) stockant des informations cartographiques pour chaque version ;
une mémoire d'informations de version (15) stockant, par la corrélation avec des informations d'identification identifiant un dispositif de navigation individuel (2), des informations de version pour chaque catégorie de route des informations cartographiques stockées dans le dispositif de navigation (2) ;
une section de réception (16) recevant les informations d'identification à partir du dispositif de navigation (2) ;
une section d'extraction (11) obtenant, sur la base des informations d'identification reçues, les informations de version pour chaque catégorie de route des informations cartographiques stockées dans le dispositif de navigation (2) correspondant aux informations d'identification à partir de la mémoire d'informations de version (15), et extrayant, sur la base des informations de version pour chaque catégorie de route obtenues, des données différentielles pour chaque catégorie de route avec des informations cartographiques de la dernière version à partir de la mémoire d'informations cartographiques (14) ; et
une section de transmission (16) transmettant les données différentielles pour chaque catégorie de route extraites par la section d'extraction (11) au dispositif de navigation (2) correspondant aux informations d'identification reçues par la section de réception (16).

2. Centre de distribution d'informations cartographiques (3) selon la revendication 1, dans lequel à mesure que la section de réception (16) reçoit des informations de demande de mise à jour de zone pour demander des informations de mise à jour correspondant à une zone prédéfinie des informations cartographiques conjointement avec les données d'identification, la section d'extraction (11) obtient, sur la base des informations d'identification reçues, les informations de version pour chaque catégorie de route correspondant à la zone prédéfinie à partir des informations de version pour chaque catégorie de route des informations cartographiques stockées dans le dispositif de navigation (2) correspondant aux données d'identification, et extrait, sur la base des informations de version pour chaque catégorie de route obtenues, des données différentielles pour chaque catégorie de route avec les informations cartographiques de la dernière version à partir de la mémoire d'informations cartographiques (14).

3. Centre de distribution d'informations cartographiques (3) selon la revendication 1 ou 2, comprenant en outré :
une section de mise à jour d'informations de version (11) mettant à jour, à mesure que la section de réception (16) reçoit, à partir du dispositif de navigation (2) auquel la section de transmission (16) transmet les données différentielles pour chaque catégorie de route, des informations d'achèvement de mise à jour représentant l'achèvement de la mise à jour d'informations cartographiques sur la base des données différentielles, des informations de version pour chaque catégorie de route des informations cartographiques stockées dans le dispositif de navigation (2) et stockées dans la mémoire d'informations de version (15) sur la base des données différentielles transmises.

4. Centre de distribution d'informations cartographiques (3) selon l'une quelconque des revendications 1 à 3, dans lequel
les informations cartographiques sont divisées en une unité de maille d'une région prédéterminée,
la mémoire d'informations de version (15) stocke les informations de version pour chaque catégorie de route dans l'unité de maille, et
la section d'extraction (11) extrait les données différentielles pour chaque catégorie de route dans l'unité de maille.

5. Procédé de distribution d'informations cartographiques comprenant .
une étape de réception dans laquelle un centre de distribution d'informations cartographiques (3) reçoit à partir d'un dispositif de navigation (2) des informations d'identification identifiant le dispositif de navigation (2) ;
une étape d'extraction dans laquelle le centre de distribution d'informations cartographiques (3) obtient, sur la base des informations d'identification reçues dans l'étape de réception, des informations de version pour chaque catégorie de route d'informations cartographiques stockées dans le dispositif de navigation (2) correspondant aux informations d'identification à partir d'une mémoire d'informations de version (15) stockant, par la corrélation avec des informations d'identification identifiant un dispositif de navigation individuel (2), des informations cartographiques pour chaque catégorie de route des informations cartographiques stockées dans le dispositif de navigation (2), de manière à extraire, sur la base des informations de version pour chaque catégorie de route obtenue, des données différentielles pour chaque catégorie de route avec des informations cartographiques de la dernière version à partir d'une mémoire d'informations cartographiques (14) ; et
une étape de transmission dans laquelle le centre de distribution d'informations cartographiques (3) transmet les données différentielles pour chaque catégorie de route extraites dans l'étape d'extraction au dispositif de navigation (2) correspondant aux informations d'identification reçues dans l'étape de réception.

6. Système de distribution d'informations cartographiques (1) comprenant :
un dispositif de navigation (2) mettant à jour des informations cartographiques sur la base informations de mise à jour reçues ; et
un centre de distribution d'informations cartographiques (3) selon la revendication 1 distribuant des informations de mise à jour au dispositif de navigation (2), où
la section d'extraction (11) correspond à une première section d'extraction (11),
la section de transmission (16) correspond à une première section de transmission d'informations de mise à jour (16) ; le dispositif de navigation (2) comprenant :
une section de transmission de données de demande (27) transmettant des données de demande de mise à jour pour demander des informations de mise à jour pour une zone prédéfinie des informations cartographiques et des informations d'identification identifiant le dispositif de navigation (2) au centre de distribution d'informations cartographiques (3) ; le centre de distribution d'informations cartographiques (3) comprenant en outre :
une section de réception de données de demande (16) recevant les données de demande de mise à jour et les données d'identification ;
la première section d'extraction (11) obtenant, sur la base des informations d'identification reçues, les informations de version des informations cartographiques dans la zone prédéfinie stockées dans le dispositif de navigation (2), la première section de transmission d'informations de mise à jour (16) transmettant des premières informations d'identification de distribution identifiant les données différentielles au dispositif de navigation (2) correspondant aux informations d'identification reçues par la section de réception de données de demande (16) ;
une section de réception d'informations d'identification (16) recevant les premières informations d'identification de distribution et les données d'identification ; et
une première unité de commande de mise à jour d'informations de version (11) effectuant une commande pour obtenir, sur la base des informations d'identification reçues, les informations de version des informations cartographiques stockées dans le dispositif de navigation (2) correspondant aux informations d'identification à partir de la mémoire d'informations de version (15), et effectuant une commande pour mettre à jour, sur la base des premières informations d'identification de distribution reçues, des informations de version de la zone prédéfinie à partir des informations de version obtenues ; le dispositif de navigation (2) comprenant en outre :
une section de réception d'informations de mise à jour (27) recevant les données différentielles et les premières données d'identification de distribution ; et
une première unité de commande de mise à jour (41) effectuant une commande pour mettre à jour les informations cartographiques de la zone prédéfinie sur la base des données différentielles reçues, et lors de la mise à jour des informations cartographiques de la zone prédéfinie, effectuant une commande pour transmettre les premières informations d'identification de distribution reçues et les informations d'identification au centre de distribution d'informations cartographiques (3).

7. Système de distribution d'informations cartographiques (1) selon la revendication 6, dans lequel le dispositif de navigation (2) comprend en outre :
un détecteur d'état de véhicule détectant un état de véhicule ;
une section de réglage de destination (24) pour régler une destination ;
une mémoire de point de mise à jour (37) stockant un point de mise à jour pré-enregistré ; et
une section de réglage de drapeau (41) pour mettre en/hors service un drapeau de coordonnées ; la section de transmission de données de demande (27) transmet un drapeau de coordonnées mis en service et une position de coordonnées du point de mise à jour comme étant les données de demande de mise à jour à mesure que l'état de véhicule détecté par le détecteur d'état de véhicule est un état de démarrage de moteur, et transmet un drapeau de coordonnées mis hors service et une position de coordonnées de la destination comme étant les données de demande de mise à jour à mesure que l'état de véhicule détecté par le détecteur d'état de véhicule est un état de régalage de destination, et le centre de distribution d'informations cartographiques (3) comprend :
une section de sélection de zone (11) sélectionnant, à mesure que la section de réception de données de demande (16) reçoit le drapeau de coordonnées mis en service et la position de cordonnées, une première zone centrée par la position de coordonnées comme étant la zone prédéfinie, et sélectionnant, à mesure que la section de réception de données de demande (16) reçoit le drapeau de coordonnées mis hors service et la position de coordonnées, une deuxième zone centrée par la position de coordonnées comme étant la zone prédéfinie.

8. Système de distribution d'informations cartographiques (1) selon la revendication 6 ou 7, dans lequel le dispositif de navigation (2) comprend en outre :
un lecteur (28) lisant des informations cartographiques se rapportant à une zone de distribution prédéfinie et des deuxièmes informations d'identification de distribution identifiant les informations cartographiques à partir d'un support de stockage (6) stockant les informations cartographiques et les deuxièmes données d'identification de distribution ; et
une deuxième unité de commande de mise à jour (41) effectuant une commande pour mettre à jour les informations cartographiques de la zone de distribution sur la base des informations cartographiques lues par le lecteur (28), et lors de la mise à jour des informations cartographiques de la zone de distribution, effectuant une commande pour transmettre les deuxièmes informations d'identification de distribution et les informations d'identification lues par le lecteur (28) au centre de distribution d'informations cartographiques (3) ; le centre de distribution d'informations cartographiques (3) comprend en outre :
une deuxième section d'extraction (11) extrayant des informations cartographiques de la dernière version de la zone de distribution à partir de la mémoire d'informations cartographiques (14) à mesure que la section de réception de données de demande (16) reçoit des données de demande de mise à jour à partir d'un terminal de communication pour demander des informations de mise à jour pour la zone de distribution des données cartographiques ;
une deuxième section de transmission d'informations de mise à jour (16) transmettant les informations cartographiques de la zone de distribution extraites par la deuxième section d'extraction (11) et des deuxièmes informations d'identification de distribution identifiant les informations cartographiques au terminal de communication ; et
une deuxième unité de commande de mise à jour d'informations de version (11) effectuant une commande pour obtenir, à mesure que la section de réception d'informations d'identification (16) reçoit les deuxièmes informations d'identification de distribution et les données d'identification, sur la base des informations d'identification reçues, les informations de version des informations cartographiques stockées dans le dispositif de navigation (2) correspondant aux informations d'identification à partir de la mémoire d'informations de version (15), et effectuant une commande pour mettre à jour, sur la base des deuxièmes informations d'identification de distribution reçues, des informations de version de la zone de distribution à partir des informations de version obtenues ; et le terminal de communication comprend :
un enregistreur (5A) enregistrant, d'une manière lisible par le lecteur (28), les informations cartographiques de la zone de distribution reçues et les deuxièmes informations d'identification de distribution dans le support de stockage (6).

9. Procédé de distribution d'informations cartographiques selon la revendication 5 dans lequel
l'étape de réception correspond à une étape de réception de données de demande,
l'étape d'extraction correspond à une première étape d'extraction, et
l'étape de transmission correspond à une première étape de transmission d'informations de mise à jour, et où un centre de distribution d'informations cartographiques (3) distribue, à un dispositif de navigation (2) mettant à jour des informations cartographiques sur la base d'informations de mise à jour reçues, les données de mise à jour, le procédé comprenant :
une étape de transmission de données de demande dans laquelle le dispositif de navigation (2) transmet des données de demande de mise à jour pour demander des informations de mise à jour pour une zone prédéfinie des informations cartographiques et des informations d'identification identifiant le dispositif de navigation (2) au centre de distribution d'informations cartographiques (3) ;
l'étape de réception de données de demande dans laquelle le centre de distribution d'informations cartographiques (3) reçoit les données de demande de mise à jour transmises dans l'étape de transmission de données de demande ;
la première étape d'extraction dans laquelle le centre de distribution d'informations cartographiques (3) obtient, sur la base des informations d'identification reçues dans l'étape de réception de données de demande, des informations de version des informations cartographiques dans la zone prédéfinie stockées dans le dispositif de navigation (2) ;
la première étape de transmission d'informations de mise à jour dans laquelle le centre de distribution d'informations cartographiques (3) transmet des premières informations d'identification de distribution identifiant les données différentielles au dispositif de navigation (2) correspondant aux informations d'identification reçues dans l'étape de réception de données de demande ;
une étape de réception d'informations de mise à jour dans laquelle le dispositif de navigation (2) reçoit les données différentielles transmises dans la première étape de transmission d'informations de mise à jour et des premières données d'identification de distribution ;
une première étape de commande de mise à jour dans laquelle le dispositif de navigation (2) met à jour les informations cartographiques de la zone prédéfinie sur la base des données différentielles reçues dans l'étape de réception d'informations de mise à jour, et lors de la mise à jour des informations cartographiques de la zone prédéfinie, effectue une commande pour transmettre les première informations d'identification de distribution reçues et les informations d'identification au centre de distribution d'informations cartographiques (3) ;
une étape de réception d'informations d'identification dans laquelle le centre de distribution d'informations cartographiques (3) reçoit les premières informations d'identification de distribution transmises dans la première étape de commande de mise à jour et les données d'identification ; et
une première étape de commande de mise à jour d'informations de version dans laquelle le centre de distribution d'informations cartographiques (3) obtient, sur la base des informations d'identification reçues dans l'étape de réception d'informations d'identification, des informations de version des informations cartographiques stockées dans le dispositif de navigation (2) correspondant aux informations d'identification à partir de la mémoire d'informations de version (15), de manière à effectuer une commande pour mettre à jour, sur la base des premières informations d'identification de distribution reçues, des informations de version de la zone prédéfinie à partir des informations de version obtenues.
